# EUROPÄISCHE PATENTSCHRIFT

(11) **EP 4 483 585 B1**
(45) Veröffentlichungstag und Bekanntmachung des Hinweises auf die Patenterteilung: **01.04.2026**
(21) Anmeldenummer: 23704801.2
(22) Anmeldetag: 16.02.2023
(51) Int. Cl.: H04R 1/08, H04R 19/00, H04R 3/00, G01N 21/17

(54) **MEMS-TAPPING-MODE-CANTILEVER ALS AKUSTISCHER NANOKRAFTSENSOR**
MEMS TAPPING MODEL CANTILEVER AS AN ACOUSTIC NANOFORCE SENSOR
CANTILEVER MEMS À MODE FRAPPE COMME NANOCAPTEUR ACOUSTIQUE DE FORCE

(30) Priorität: 24.02.2022 EP 22158393
(43) Veröffentlichungstag der Anmeldung: 01.01.2025
(73) Patentinhaber: Hahn-Schickard-Gesellschaft für angewandte Forschung e. V., 70569 Stuttgart (DE)
(72) Erfinder: BITTNER, Achim, 74080 Heilbronn (DE); BIESINGER, Daniel, 78054 Villingen-Schwenningen (DE)
(74) Vertreter: Hertin und Partner Rechts- und Patentanwälte PartG mbB
(86) Internationale Anmeldenummer: PCT/EP2023/053859
(87) Internationale Veröffentlichungsnummer: WO 2023/161113

(56) Entgegenhaltungen:
- US-A1- 2005 249 041
- US-A1- 2011 296 900
- US-A1- 2015 158 722

## Beschreibung

Die Erfindung betrifft das technische Gebiet der MEMS-Mikrofone. In einem ersten Aspekt betrifft die Erfindung ein MEMS-Mikrofon zur Detektion akustischer Signale. Das MEMS-Mikrofon weist eine schwingfähige Mikrofonmembran auf, die durch Schallwellen, die durch eine Schalleintrittsöffnung treten, zu Schwingungen angeregt wird. Weiterhin weist das MEMS-Mikrofon einen Cantilever umfassend eine Messspitze auf. Durch einen Aktuator wird der Cantilever aktiv zu Schwingungen angeregt, sodass die Messspitze kontaktlos schwingend an die Mikrofonmembran geführt wird. Dabei fließt zwischen der Mikrofonmembran und der Messspitze ein Tunnelstrom, mit dem das Schwingungsverhalten der Mikrofonmembran, das von den Schallwellen abhängt, detektiert werden kann. Eine elektronische Schaltung ist dazu eingerichtet, den Tunnelstrom zwischen der Mikrofonmembran und der Messspitze zu messen. Mittels des erfindungsgemäßen MEMS-Mikrofons wird es ermöglicht, besonders niedrige Schalldruckpegel hochaufgelöst zu detektieren.

In einem weiteren Aspekt betrifft die Erfindung Verfahren zur Detektion akustischer Signale mittels des erfindungsgemäßen MEMS-Mikrofons.

### Hintergrund und Stand der Technik

Mikrofone sind elektroakustische Wandler, die ein Schallereignis, d. h. auftretende Schallwellen, in ein elektrisches Signal umwandeln. Das elektrische Signal entspricht dem akustischen Eingangssignal. Im Stand der Technik gibt es eine Vielzahl von Bau- und Funktionsweisen unterschiedlicher Mikrofonarten, die jeweils unterschiedliche Anwendungszwecke und Funktionen erfüllen.

Insbesondere sind im Stand der Technik äußerst kompakte Mikrofone bekannt, die auf der MEMS-Technologie beruhen, sogenannte MEMS-Mikrofone. MEMS ist die Abkürzung für mikroelektromechanisches System (englisch microelectromechanical system) und zeichnet sich durch eine miniaturisierte und kompakte Bauweise aus, die insbesondere im Mikrometerbereich vorliegt und eine hervorragende Funktionalität mit immer geringeren Herstellungskosten aufweist.

Meist umfasst ein MEMS-Mikrofon eine schwingfähige Mikrofonmembran, die zur Aufnahme von Druckwellen eines Fluids eingerichtet ist. Bei dem Fluid kann es sich sowohl um ein gasförmiges als auch um ein flüssiges Fluid handeln, bevorzugt handelt es sich um Schalldruckwellen. Ein MEMS-Mikrofon wandelt bevorzugt Druckwellen in elektrische Signale um und stellt somit einen Schalldetektor dar.

MEMS-Mikrofone weisen eine Vielzahl von Vorteilen auf. Beispielsweise lassen sie sich durch ihre kompakte Ausgestaltung besonders einfach zu Arrays anordnen, was sich für Schallmessungen mit einer Richtcharakteristik nutzen lässt. Darüber hinaus können sie über verbreitete, weitreichend automatisierte Prozesse der Halbleitertechnik hergestellt werden.

Aus dem Stand der Technik ist es bekannt, MEMS-Mikrofone mit anderen Messsensoren zu kombinieren, um mehrere Messsignale zu messen und hierdurch vielfältigere Messbereiche bzw. Anwendungszwecke abdecken zu können. So wird beispielsweise in der US 2015/0158722 A1 eine MEMS-Vorrichtung offenbart, welche ein MEMS-Mikrofon und einen weiteren MEMS-Sensor in Form eines Bewegungssensors aufweist. In einer darin beschriebenen Ausführungsform liegt die Membran des MEMS-Mikrofons vor einer perforierten Rückplatte vor. Das MEMS-Mikrofon befindet sich auf einem Substrat, an dem die Öffnung für den Eintritt von Schallwellen angebracht ist. Ferner liegt auf dem Substrat ein weiterer Sensor vor, wobei es sich z. B. um ein Gyroskop, einen Beschleunigungssensor oder einen Drucksensor handeln kann. Zusätzlich zur Messung von Größen durch das MEMS-Mikrofon und den weiteren Sensoren können auch weitere Informationen gemessen und/oder verarbeitet werden, wie beispielsweise Ultraschallwellen, Infrarotlicht, Temperatur, Feuchtigkeit und/oder eine Gasspezies der Umgebung der MEMS-Vorrichtung.

Die Mehrheit der MEMS-Mikrofone ist jedoch für Audioanwendungen konzipiert, d. h. für Telefone und/oder Hörgeräte. Diese Anwendungen sind zumeist durch eine Bandbreite von weniger als 20 kHz und einen Schalldruckpegel von weniger als ca. 120 dB gekennzeichnet.

Im Stand der Technik gibt es jedoch auch das Bestreben, besonders geringe Schalldruckpegel zu messen, insbesondere mit Methoden der Mikrosystemtechnik. Dies ist beispielsweise relevant bei der photoakustischen Spektroskopie. Bei der photoakustischen Spektroskopie wird intensitätsmodulierte Strahlung mit Frequenzen im Absorptionsspektrum eines in einem Gas zu detektierenden Moleküls eingesetzt. Ist dieses Molekül im Strahlengang vorhanden, findet eine modulierte Absorption statt, die zu Erwärmungs- und Abkühlungsprozessen führt, deren Zeitskalen die Modulationsfrequenz der Strahlung widerspiegeln. Die Erwärmungs- und Abkühlungsprozesse führen zu Expansionen und Kontraktionen des Gases, wodurch Schallwellen mit der Modulationsfrequenz verursacht werden. Diese können sich messen lassen, beispielsweise durch Schalldetektoren wie MEMS-Mikrofone. Die dabei auftretenden Schalldrücke sind sehr gering.

Photoakustische Gassensoren als solche sind im Stand der Technik bereits hinlänglich bekannt. Eine Variante eines photoakustischen Gassensors wird in der US 2011/0296900 A1 offenbart. Dabei werden alle Komponenten zur Betriebstauglichkeit in einer oder als MEMS-Vorrichtung verbaut. Der photoakustische Gassensor weist eine Infrarotquelle auf, die auf einem Substrat angebracht ist. Ein integriertes Mikrofon kann sich auf dem Substrat selbst oder auf einem zweiten Substrat befinden. Ein Filter für das Infrarotlicht liegt auf einem dritten Substrat vor.

Im Stand der Technik sind ebenfalls Ansätze bekannt, niedrige Schalldruckpegel zu messen, insbesondere für Zwecke der photoakustischen Spektroskopie. Gerade in der photoakustischen Spektroskopie ist nämlich die Messung von geringen Schalldruckpegeln relevant, um die Aufnahme von zuverlässigen Messergebnissen ermöglichen zu können.

In Sievilä et al. (2013) wird ein Herstellungsverfahren eines Cantilevers und eine Sensoranordnung offenbart, um die Schalldruckpegel im Rahmen der photoakustischen Spektroskopie zu messen. Dabei wird moduliertes Infrarotlicht in eine Probenzelle emittiert, in der sich ein Gas befindet, das die Wellenlänge des Infrarotlichtes absorbiert. An einem Ende der Probenzelle befindet sich ein Cantilever, welcher durch die Absorption des Infrarotlichtes ausgelenkt wird. Außerhalb der Probenzelle befindet sich ein Michelson-Morley-Interferometer. Der Strahlengang des Michelson-Morley-Interferometers ist derart ausgestaltet, dass dieser durch ein transparentes Fenster den Cantilever trifft. Eine Änderung der Absorption des Gases wirkt sich auch auf die Position des Cantilevers und damit auch auf den Strahlenverlauf des Michelson-Morley-Interferometers aus. Somit wird eine Änderung des Schalldrucks gemessen. Weitere Anwendungen werden hierbei nicht beschrieben. Der Aufbau ist insbesondere durch den Einsatz eines Michelson-Morley-Interferometers aufwendig und nachteilig für eine kompakte Ausgestaltung des Messsystems.

Mit den im Stand der Technik bekannten MEMS-Mikrofonen ist es auch nur eingeschränkt möglich, geringe Schalldruckpegel präzise zu messen. Insbesondere sind die meisten Messungen mit MEMS-Mikrofonen ungeeignet für geringe Frequenzen und weisen in dem Bereich ein nur geringes Signal-Rausch-Verhältnis auf.

In US 2005/0249041 A1 wird ein MEMS-Mikrofon offenbart, dass eine erhöhte Sensitivität besitzen soll. Das MEMS-Mikrofon der US 2005/0249041 A1 soll u. a. verschiedene Vorteile gegenüber einem theoretischer Ansatz aufweisen, welcher in den einleitenden Absätzen [0007] und [0008] der US 2005/0249041 A1 skizziert wird. Gemäß des diskutierten Ansatzes wird ein Tunnelstrom zwischen einer Messspitze und der Membran durch einen geschlossenen Regelkreis konstant gehalten. Dazu erfolgt ein Nachführen des Cantilevers, an dem die Messspitze angebracht ist, wenn die Membran durch auftreffende Schallwellen in Schwingungen versetzt wird. Ein solches Verfahren würde gemäß der Lehre US 2005/0249041 A1 nachteilig eine hohe Sensitivität vor z. B. Erschütterungen aufweisen und teurer in der Herstellung sein. Darüber hinaus kann es gemäß der US 2005/0249041 A1 bei einem solchen Ansatz vorkommen, dass die Resonanzfrequenz des Cantilevers in den Bereich der zu detektierenden Frequenzen fällt, wodurch eine Kontrolle der Messpitze schwierig bis unmöglich wird. Insofern ist ein solcher Ansatz gemäß der Offenbarung der US 2005/0249041 A1 ungeeignet für die Bereitstellung eines MEMS-Mikrofons.

Das gemäß der Lehre der US 2005/0249041 A1 offenbarte MEMS-Mikrofon umfasst hingegen eine Messspitze, die sich auf einer perforierten, d. h. mit Öffnungen versehenen, Abstützplatte und direkt hinter der Mikrofonmembran befindet. Durch auftretende Schallwellen wird die Mikrofonmembran in Schwingungen versetzt. Zwischen der Messspitze auf der Abstützplatte und der Mikrofonmembran fließt ein Tunnelstrom, der als Messsignal ausgewertet wird. Die Messspitze selbst führt keine Bewegungen aus, wodurch der Einfluss von Erschütterungen verringert werden soll und die Notwendigkeit einer Kontrolle der Bewegung der Messspitze entfällt. Durch die Öffnungen der Abstützplatte können jedoch Verluste des zu detektierenden Schalls auftreten, was dazu führt, dass der Schall nicht mit hoher Genauigkeit gemessen wird. Des Weiteren kann, falls hohe Schalldrücke auftreten, die Mikrofonmembran die Messspitze berühren, da die Messspitze nicht bewegbar ausgestaltet ist. Die Messung erfolgt damit statisch. Berühren sich die Messspitze und die Mikrofonmembran, fließt kein Tunnelstrom mehr, sondern ein ohmscher Strom, was zu einer Änderung des Messsignals führt und einen zuverlässigen und dauerhaften Betrieb beeinträchtigen kann.

In Bezug auf die Bereitstellung von MEMS-Mikrofonen für sensitive Messungen, auch bei niedrigen Schalldruckpegeln, besteht mithin ein Bedarf an Verbesserung.

### Aufgabe der Erfindung

Aufgabe der Erfindung war es, die Nachteile des Standes der Technik zu beseitigen und ein MEMS-Mikrofon bereitzustellen, mit dem niedrige Schalldruckpegel mit hoher Auflösung gemessen werden können. Weiterhin sollte sich das MEMS-Mikrofon vorzugsweise durch die Möglichkeit besonders zuverlässiger und dauerhafter Messungen sowie einem kostengünstigen und kompakten Aufbau auszeichnen.

### Zusammenfassung der Erfindung

Die erfindungsgemäße Aufgabe wird gelöst durch die Merkmale der unabhängigen Ansprüche. Vorteilhafte Ausgestaltungen der Erfindung sind in den abhängigen Ansprüchen beschrieben.

In einer bevorzugten Ausführungsform betrifft die Erfindung ein MEMS-Mikrofon zur Detektion akustischer Signale umfassend eine Schalleintrittsöffnung, eine schwingfähige Mikrofonmembran und eine elektronische Schaltung, wobei durch die Schalleintrittsöffnung eintretende Schallwellen die schwingfähige Mikrofonmembran zu Schwingungen anregen, dadurch gekennzeichnet, dass das MEMS-Mikrofon einen Cantilever umfassend eine Messspitze und einen Aktuator aufweist, wobei die elektronische Schaltung für eine Messung eines Tunnelstroms zwischen der Mikrofonmembran und der Messspitze sowie für eine aktive Anregung des Cantilevers zu Schwingungen eingerichtet ist, wobei zur Detektion akustischer Signale die Messspitze kontaktlos schwingend an die Mikrofonmembran geführt wird, während der messbare Tunnelstrom eine Detektion des von den Schallwellen abhängigen Schwingungsverhaltens der Mikrofonmembran erlaubt.

Das erfindungsgemäße MEMS-Mikrofon hat sich dahingehend als überaus vorteilhaft erwiesen, dass es mit besonders hoher Auflösung niedrige Schalldruckpegel präzise messen kann. Das MEMS-Mikrofon weist gegenüber den bekannten MEMS-Mikrofonen des Standes der Technik eine deutlich höhere Sensitivität auf. Dies macht sich beispielsweise dadurch bemerkbar, dass trotz niedriger Schalldruckpegel ein besonders hohes Signal-Rausch-Verhältnis erzielt werden kann.

Die hohe Sensitivität bei niedrigen Schalldruckpegel basiert auf dem vorteilhaften Messprinzip unter Ausnutzung eines Tunnelstroms. Bevorzugt wird der Cantilever umfassend der Messspitze durch den Aktuator kontaktlos schwingend zur Mikrofonmembran geführt. Dabei ist der Abstand zwischen der Messspitze und der Mikrofonmembran derart gering, dass durch den quantenmechanischen Tunneleffekt ein Tunnelstrom zwischen der Mikrofonmembran und der Messspitze fließt. Vorzugsweise fließt der Tunnelstrom durch Anlegen einer Spannung. Dabei hängt der Tunnelstrom exponentiell vom Abstand zwischen der Mikrofonmembran und der Messspitze ab. Aufgrund hochsensitiven Abhängigkeit des Tunnelstroms vom Abstand können durch die Messung des Tunnelstroms auch kleinste Distanzänderungen zwischen der Mikrofonmembran und der Messspitze erfasst werden.

Durch die aktive Anregung des Cantilevers (insbesondere der Messpitze) zu Schwingungen ändert sich vorzugsweise der Abstand zwischen der Messspitze und der Mikrofonmembran periodisch mit der bekannten Periodizität der anregenden Schwingung. Damit ist bevorzugt der Tunnelstrom ein periodisches Signal dessen Amplitude vom Abstand der Messpitze zur Mikrofonmembran während der Schwingung abhängt.

Tritt ein Schallereignis auf, d. h. treffen Schallwellen auf die Mikrofonmembran, wird die Mikrofonmembran ausgelenkt und selbst in Schwingungen versetzt. Somit ändert sich der Abstand zwischen der Mikrofonmembran und der schwingenden Messspitze. Der messbare Tunnelstrom ändert sich mithin in Abhängigkeit des von den Schallwellen abhängigen Schwingungsverhaltens der Mikrofonmembran.

Zur Detektion akustischer Signale mittels einer Messung des Tunnelstroms kann die Vorrichtung (hierzu an späterer Stelle im Detail erläutert) unterschiedlich konfiguriert sein.

Beispielsweise kann, analog zu einem *constant height mode,* die Detektion derart erfolgen, dass die Auslenkung und Mittelposition der schwingenden Messspitze am Cantilever nicht verändert wird, sodass durch eine Schwingung der Mikrofonmembran der Abstand zwischen dieser und der Messspitze sich ändert und damit auch der Tunnelstrom.

Alternativ kann beispielsweise die Vorrichtung auch dafür ausgelegt sein, dass zur konstanten Haltung einer Amplitude des Tunnelstroms die Mittelposition der Schwingung des Cantilevers angepasst wird. Diese Konfiguration entspräche einem *constant current mode* Messprinzip, wobei der Tunnelstrom bzw. dessen Amplitude als Regelgröße für die Mittelposition der schwingenden Messspitze genutzt wird.

Erfindungsgemäß wird in jedem Fall vorteilhaft ausgenutzt, dass das Tunnelstromsignal äußerst sensitiv auch gegenüber kleinsten Auslenkungen der Mikrofonmembran ist, sodass überaus geringe Schalldruckpegeländerungen zuverlässig detektiert werden.

Vorteilhaft können mittels der erfindungsgemäßen Vorrichtung besonders geringe Schalldruckpegel mit hoher Genauigkeit gemessen werden. So kann das erfindungsgemäße MEMS-Mikrofon vorteilhafterweise Schalldruckpegel messen, die insbesondere weniger als ca. 20 dB (Dezibel), bevorzugt weniger als ca. 10 dB, besonders bevorzugt weniger als ca. 5 dB und sogar weniger als ca. 1 dB, betragen.

Dabei ist es besonders vorteilhaft, dass das erfindungsgemäße MEMS-Mikrofon niedrige Schalldruckpegel mit besonders hohem Signal-Rausch-Verhältnis messen kann.

Begriffe wie im Wesentlichen, ca. etc. beschreiben bevorzugt einen Toleranzbereich von weniger als ± 40 %, bevorzugt weniger als ± 20 %, besonders bevorzugt weniger als ± 10 %, noch stärker bevorzugt weniger als ± 5 % und insbesondere weniger als ± 1 % und umfassen insbesondere den exakten Wert. Teilweise beschreibt bevorzugt zu mindestens 5 %, besonders bevorzugt zu mindestens 10 %, und insbesondere zu mindestens 20 %, in einigen Fällen zu mindestens 40 %.

Weiterhin ist das erfindungsgemäße Verfahren dahingehend vorteilhaft, dass durch die Bewegungsfähigkeit der Messspitze, insbesondere durch die Schwingung der Messspitze, eine Berührung mit der Mikrofonmembran vermieden wird. Eine mögliche Berührung könnte beispielsweise in der US 2005/0249041 A1 erfolgen, wenn die Mikrofonmembran bei hohen Schalldruckpegeln starke Auslenkungen widerfährt. Vorteilhafterweise kann dies durch das erfindungsgemäße MEMS-Mikrofon vermieden werden, da die Messspitze kontaktlos schwingend an die Mikrofonmembran geführt wird. Mithin wird Verschleiß vermieden und eine langanhaltende Funktionsfähigkeit des erfindungsgemäßen MEMS-Mikrofons gewährleistet.

Weiterhin erlaubt die dynamische Messung des Tunnelstroms mittels einer kontaktlos schwingenden Messpitze ein hochsensitives Abtasten des Schwingungsverhalten der Membran für einen nahezu beliebigen Frequenzbereich. Insbesondere kann die Modulationsfrequenz der schwingenden Messspitze frei gewählt werden, sodass unabhängig von der Anregungsfrequenz bei sehr niedrigen (0 Hz) bis sehr hohen Frequenzen (MHz) gemessen werden kann. Durch die Unabhängigkeit der Modulationsfrequenz der Messspitze von der Anregungsfrequenz kann vorteilhaft über einen weiten Frequenzbereich ein hohes Signal-Rausch-Verhältnis erzielt werden. Dies stellt einen besonderen Vorteil gegenüber bekannten MEMS-Mikrofonen dar, welche insbesondere bei tieferen Frequenzen ein erhöhtes Rauschen zeigen.

Im erfindungsgemäßen Kontext ist es bevorzugt vorgesehen, dass der Cantilever umfassend die Messspitze eine periodische Schwingung ausführt, zu der sie aktiv angeregt wird. Die periodische Schwingung des Cantilevers erfolgt bevorzugt im Sinne eines *tapping.* Damit ist bevorzugt gemeint, dass der Cantilever eine kontinuierliche, periodische Schwingung ausführt, welche unabhängig von einer Bewegung der Mikrofonmembran ist. Stattdessen wird die Messspitze kontaktlos schwingend an die Mikrofonmembran geführt, um auf diese Weise eine Detektion etwaiger Schwingungen der Membran zu ermöglichen, sofern diese durch Schallwellen angeregt wird. Bei einer solchen kontaktlosen Schwingung des Cantilevers im Sinne eines *tapping* ändert die Messspitze mithin den Abstand zur schwingenden Membran vorzugsweise periodisch.

Dadurch unterscheidet sich das erfindungsgemäße MEMS-Mikrofon auch von dem in der US 2005/0249041 A1 in den Abs. [0007] und [0008] beschriebenen nachteiligen Ansatz, bei dem eine Messpitze eines Cantilevers etwaigen Schwingungen der Membran nachgeführt wird. In dem beschriebenen Ansatz erfolgt gerade keine aktive Anregung eines Cantilevers, welcher dabei kontaktlos schwingend an die Mikrofonmembran geführt wird. Stattdessen wird der Abstand der Messspitze zur Membran konstant gehalten.

Die aktiv angeregte periodische Schwingung des Cantilevers im Sinne eines erfindungsgemäßen *tapping* ist somit nicht mit einem Nachführen des Cantilevers an Schwingungen der Mikrofonmembran zu vergleichen, welcher den jeglichen Bewegungen der Membran aufgrund einer Schallanregung lediglich folgt. Die aktiv angeregte periodische Schwingung des Cantilevers erfolgt stattdessen unabhängig von Schwingungen der Mikrofonmembran und wird über den gesamten Detektionsprozess aufrechterhalten.

Dies wird auch dadurch deutlich, dass die Schwingung des Cantilevers bevorzugt mit einer um ein Vielfaches höhere Frequenz (beispielsweise um einen Faktor 2, 3, 4 oder mehr) erfolgt als erwartbare Schwingungen der Mikrofonmembran. Im Gegensatz zu einem Nachführen des Cantilevers kann insbesondere zudem eine nachteilig hohe Sensitivität in Bezug auf Vibrationen vermieden werden.

Somit kann durch eine aktive Anregung des Cantilevers zu periodischen Schwingungen vorteilhaft die Messung von Schallereignissen mit hoher Sensitivität auch bei äußerst geringem Schalldruckpegel gewährleistet werden. Dem erfindungsgemäßen MEMS-Mikrofon gelingt es dabei vorteilhafterweise, den Einfluss von Störfaktoren zu verringern oder zu beseitigen.

Zudem ist das erfindungsgemäße MEMS-Mikrofon dahingehend vorteilhaft, dass keine Strömungsverluste des Fluids resultieren, in dem sich der Schall ausbreitet. Stattdessen trifft der Schall vorzugsweise unmittelbar auf die Mikrofonmembran, ohne dass eine Verzerrung der Schallwellen oder Energieverluste durch weitere Komponenten entstünden. Somit kann vorteilhafterweise ein besonders genaues und unverfälschtes Signal gemessen werden. In dieser Hinsicht kann es auch bevorzugt sein, dass das erfindungsgemäße MEMS-Mikrofon außer einer Schalleintrittsöffnung keine weiteren Öffnungen aufweist.

Darüber hinaus ist das erfindungsgemäße MEMS-Mikrofon vorteilhaft besonders prozesseffizient herstellbar, da es durch standardisierte Prozesse der Halbleiter- und Mikrosystemtechnik bereitgestellt werden kann. Hierbei kann insbesondere auf bewährte, automatisierte Verfahren der Halbleiterprozessierung zurückgegriffen werden, um eine kostengünstige Massenherstellung umzusetzen.

Das erfindungsgemäße MEMS-Mikrofon nutzt eine neue Anwendung von Messspitzen, die aus der Rastertunnelmikroskopie bekannt sind und kann daher zudem ebenfalls auf bekannte Prozesse zur Herstellung solcher Messpitzen zurückgreifen. Die erfindungsgemäße Messspitze wird jedoch nicht für die Aufnahme der Struktur einer Materialoberfläche verwendet, sondern für akustische Zwecke zur Detektion von Schallereignissen. Somit kombiniert das erfindungsgemäße MEMS-Mikrofon auf effiziente Weise zwei unterschiedliche technische Gebiete, um eine deutliche Verbesserung hinsichtlich der Detektion akustische Signale zu ermöglichen.

Das erfindungsgemäße MEMS-Mikrofon stellt eine vorteilhafte Weiterentwicklung von üblichen MEMS-Mikrofonen dar, in dem durch eine dynamische Messung eines Tunnelstroms hochsensitive Messungen des Schwingungsverhaltens einer Mikrofonmembran verwandt werden und der Messbereich des MEMS-Mikrofonen in Bezug auf Schalldruckpegel deutlich unter 20 dB erstreckt werden kann. Wie obig erläutert, wird hierbei ausgenutzt, dass der Abstand zwischen Messspitze und Mikrofonmembran mit exponentiell vom Abstand abhängt. Alternative Messmethoden, wie beispielsweise, kapazitiven Messmethoden weisen lediglich eine lineare Korrelation zwischen (kapazitivem) Messsignal und Auslenkung der Mikrofonmembran auf. Während aufgrund der Nichtlinearität eine MEMS-Mikrofon auf Basis eines Tunnelstroms für klassische Audioanwendungen weniger interessant ist, wurde erfindungsgemäß erkannt, dass die Nichtlinearität für höchst sensitive Schalldetektionen ausgenutzt werden kann, beispielsweise für die photoakustische Spektroskopie.

Ein MEMS-Mikrofon bezeichnet bevorzugt ein Mikrofon, welches auf MEMS-Technologie basiert und dessen klangaufnehmenden Strukturen mindestens teilweise eine Dimensionierung im Mikrometerbereich (ca. 1 µm bis ca. 1000 µm) aufweisen. Die klangaufnehmenden Strukturen werden vorzugsweise als Mikrofonmembran bezeichnet. Bevorzugt kann die Mikrofonmembran in Breite, Höhe und/oder Dicke eine Dimension im Bereich von weniger als 1000 µm aufweisen.

Bevorzugt ist die Mikrofonmembran ist bevorzugt flächig, das bedeutet insbesondere, dass ihre Ausdehnung in jeder der zwei Dimensionen (Höhe, Breite) ihrer Fläche größer ist als in einer hierzu senkrechten Dimension (der Dicke). Beispielsweise können Größenverhältnisse von mindestens 5:1, bevorzugt mindestens 10:1, 50: 1 oder mehr bevorzugt sein.

In einer bevorzugten Ausführungsform beträgt die Länge oder Breite der Mikrofonmembran zwischen 1 µm und 1000 µm, bevorzugt zwischen 10 µm und 500 µm. Auch Zwischenbereiche aus den vorgenannten Bereichen können bevorzugt seien wie beispielsweise 1 µm bis 10 µm, 10µm bis 50 µm, 50 µm bis 100 µm, 100 µm bis 200 µm, 200 µm bis 300 µm, 300 µm bis 400 µm, 400 µm bis 500 µm, 600 µm bis 700 µm, 700 µm bis 800 µm, 800 µm bis 900 µm oder auch 900 µm bis 1000 µm. Ein Fachmann erkennt, dass die vorgenannten Bereichsgrenzen auch kombiniert werden können, um weitere bevorzugte Bereich zu erhalten, wie beispielsweise 10 µm bis 200 µm, 50 µm bis 300 µm oder auch 100 µm bis 600 µm.

In einer bevorzugten Ausführungsform beträgt die Dicke Membran zwischen 100 nm und 10 µm, bevorzugt zwischen 500 nm und 5 µm. Auch Zwischenbereiche aus den vorgenannten Bereichen können bevorzugt seien wie beispielsweise 100 nm bis 500 nm, 500 nm bis 1 µm, 1 µm bis 1,5 µm, 1,5 µm bis 2 µm, 2 µm bis 3 µm, 3 µm bis 4 µm, 4 µm bis 5 µm, 5 µm bis 6 µm, 6 µm bis 7 µm, 7 µm bis 8 µm, 8 µm bis 9 µm oder auch 9 µm bis 10 µm. Ein Fachmann erkennt, dass die vorgenannten Bereichsgrenzen auch kombiniert werden können, um weitere bevorzugte Bereich zu erhalten, wie beispielsweise500 nm bis 3 µm, 1 µm bis 5 µm oder auch 1500 nm bis 6 µm.

Im Laufe der Entwicklung von MEMS-Mikrofonen haben sich unterschiedliche Bautypen etabliert. Dabei lassen sich diese nach der Art ihrer Schallzuführung kategorisieren. Trifft der Schall über die Gehäuseunterseite auf die Mikrofonmembran, so spricht man von einem Bottom-Port-MEMS-Mikrofon. Bottom-Port-MEMS-Mikrofone erfordern zusätzlich eine Öffnung auf dem Substrat, auf dem sich die Komponenten des MEMS-Mikrofons befinden (auch Trägersubstrat genannt), denn nur so ist für Schallwellen der Weg zur Mikrofonmembran frei. Trifft der Schall über die Gehäuseoberseite auf den Sensor, so spricht man von einem Top-Port-MEMS-Mikrofon. Ob ein Top-Port- oder ein Bottom-Port-MEMS-Mikrofon bevorzugt wird, richtet sich zumeist nach Faktoren wie der Anordnung des Mikrofons im Produkt und/oder nach Fertigungsgesichtspunkten. Das MEMS-Mikrofon kann ein Top-Port-MEMS-Mikrofon oder ein Bottom-Port-MEMS-Mikrofon sein.

Die Mikrofonmembran ist zur Aufnahme von Druckwellen des Fluids eingerichtet. Bei dem Fluid kann es sich sowohl um ein gasförmiges als auch um ein flüssiges Fluid handeln, bevorzugt handelt es sich um Schalldruckwellen. Ein MEMS-Mikrofon wandelt mithin bevorzugt Druckwellen in elektrische Signale um. Die Mikrofonmembran ist bevorzugt hinreichend dünn, sodass sie sich unter dem Einfluss der von den Schallwellen verursachten Luftdruckänderungen durchbiegt und in ein Schwingungsverhalten übergeht. Während die Mikrofonmembran schwingt, können sich elektrische Größen ändern, wie insbesondere die Stromstärke des Tunnelstroms zwischen der Mikrofonmembran und der Messspitze. Die Änderung einer elektrischen Größe kann von einer bevorzugt in dem MEMS-Mikrofon eingebauten elektronischen Schaltung, beispielsweise ein ASIC oder eine Recheneinheit, gemessen, aufgenommen und/oder ausgewertet werden. Die elektronische Schaltung misst vorzugsweise Änderungen von derartigen elektrischen Größen, die entstehen, wenn die Mikrofonmembran unter dem Einfluss von Schallwellen schwingt.

Die elektronische Schaltung wandelt die Schwingungen der Mikrofonmembran bevorzugt in elektrische Signale um. Die elektronische Schaltung umfasst dabei bevorzugt elektrische Verbindungen, beispielsweise Drähte. Vorzugsweise ist die elektronische Schaltung mit dem Cantilever und/oder der Messspitze verbunden, sodass bevorzugt der Tunnelstrom ausgelesen werden kann.

Zudem kann die elektronische Schaltung einen ASIC (englisch application-specific integrated circuit, deutsch anwendungsspezifische integrierte Schaltung), eine Recheneinheit, eine integrierte Schaltung (IC), eine programmierbare logische Schaltung (PLD), ein Field Programmable Gate Array (FPGA), einen Mikroprozessor, einen Mikrocomputer, eine speicherprogrammierbare Steuerung und/oder sonstige elektronische Schaltungselemente aufweisen.

Die elektronische Schaltung ist bevorzugt zum einen dazu eingerichtet eine Messung eines Tunnelstroms zwischen der Mikrofonmembran und der Messspitze auszuführen. Zum anderen ist die elektronische Schaltung bevorzugt dazu eingerichtet eine aktive Anregung des Cantilevers zu Schwingungen zu bewirken.

Die Formulierung, wonach die elektronische Schaltung dafür eingerichtet ist einen bestimmten Verfahrensschritt auszuführen, wie z.B. die Messung eines Tunnelstroms oder eine aktive Anregung des Cantilevers zu Schwingungen, meint bevorzugt, dass auf der elektronischen Schaltung eine Software oder Firmware installiert vorliegt, welche Befehle umfasst die genannten Verfahrensschritte durchzuführen.

Die elektronische Schaltung ist vorzugsweise zudem programmierfähig, sodass Einstellungen hinsichtlich des Betriebs des MEMS-Mikrofons verschiedene Betriebsmöglichkeiten aufweisen kann. So kann es bevorzugt sein, dass ein Anregungsmodus hinsichtlich der Messspitze und/oder des Cantilevers wählbar ist, wozu beispielsweise in der Software installiert verschiedene Betriebsmöglichkeiten installiert sein können.

Die Schalleintrittsöffnung bezeichnet bevorzugt eine Öffnung des MEMS-Mikrofons, durch die Schallwellen hindurchgelangen und auf die Mikrofonmembran treffen können. Vorzugsweise befindet sich die Schalleintrittsöffnung in Fließrichtung des Fluids, insbesondere Luft, vor der Mikrofonmembran.

Ein akustisches Signal bezeichnet bevorzugt ein elektrisches Signal, das durch Schall entsteht. Dabei ist bevorzugt Schall eine als Welle fortschreitende mechanische Deformation in einem Medium. In einem Fluid ist Schall stets eine Longitudinalwelle, insbesondere auch in Luft. Die Begriffe "Schall" und "Schallwelle" können daher synonym verwendet werden. In Gasen wie Luft kann Schall als eine dem statischen Luftdruck überlagerte Schalldruckwelle beschrieben werden. Meistens sind bei Schallwellen die Schwankungen der Zustandsgrößen Druck und Dichte klein im Verhältnis zu ihren Ruhegrößen. Wenn im Folgenden Luft als Fluid der Schallwellen diskutiert wird, so weiß der durchschnittliche Fachmann, dass die Erläuterungen auch auf andere Fluide übertragbar sind.

Ein Cantilever, oder synonym Biegebalken, ist vorzugsweise ein räumlich ausgedehntes, insbesondere längliches Element, welches entlang mindestens einer Seite schwingfähig gelagert und ansonsten vorzugsweise freistehend ist. Die schwingfähige Seite des Cantilevers kann auch als freies Ende bezeichnet werden. Ein Cantilever kann z. B. die Form eines flächigen, länglichen Quaders aufweisen, dessen Dicke deutlich kleiner im Vergleich zur Quer- und/oder Längsausdehnung ist, wobei bevorzugt die Querausdehnung kleiner ist als die Längsausdehnung. So kann es beispielsweise bevorzugt sein, dass der Cantilever eine Dicke von 0,1 µm bis 10 µm, bevorzugt von 0,5 µm bis 5 µm eine Länge von 10 µm bis 1000 µm, bevorzugt 20 µm bis 500 µm sowie eine Breite von 5 µm bis 100 µm, bevorzugt 10 µm bis 50 µm aufweist. Insbesondere die Dicke des Cantilevers ist relevant, da eine höhere Dicke mit einer verringerten Fähigkeit der Verbiegung einhergeht. Daher ist bevorzugt, dass die Dicke um ein Vielfaches, d. h. um einen Faktor 2, 3, 5, 10 oder mehr niedriger ist als die Länge und/oder Breite. Weiterhin ist es bevorzugt, dass auch die Breite niedriger ist als die Länge. Es kann jedoch auch ein beidseitig bzw. mehrseitig schwingbar gelagerter Biegebalken bevorzugt sein. Der Cantilever kann in verschiedenen Bauweisen vorliegen, die vorzugsweise für die Auswahl des Aktuators relevant sind.

Dabei kann der Cantilever bevorzugt ein unimorpher bzw. monomorpher Cantilever sein, der vorzugsweise eine aktive Schicht und eine inaktive bzw. passive Schicht umfasst. Dabei bezeichnet eine aktive Schicht vorzugsweise eine piezoelektrische Schicht, bei der eine Kraft bzw. eine Deformation durch ein anliegendes elektrisches Feld, insbesondere durch Anlegen einer elektrischen Steuerspannung (erzeugbar durch die elektronische Schaltung), ausgelöst wird. Diese Kraft bzw. Deformation erzeugt vorzugsweise ein Durchbiegen und/oder eine Verformung des Balkens, welche bevorzugt durch ein periodisches elektrisches Steuersignal eine aktive Schwingung auslösen kann. Die inaktive Schicht umfasst dabei vorzugsweise ein nichtpiezoelektrisches Material. Dabei ist bevorzugt, dass aktive Schicht und inaktive Schicht so zusammenwirken, dass eine resultierende Kraft aufgrund der angelegten Steuerspannung erzeugt wird, welche eine Auslenkung des Balkens hervorruft, welche bei einer Periodizität des elektrischen Steuersignals bevorzugt eine Schwingung verursacht. Es kann ebenso bevorzugt sein, dass auch die inaktive Schicht ein piezoelektrisches Material umfasst, welches jedoch nicht elektrisch kontaktiert und/oder durch ein Steuersignal angesteuert wird, an dem vorteilhafterweise kein elektrisches Steuersignal angelegt wird und welche insbesondere kein externes elektrisches Feld erfährt, welches eine interne Kraft und/oder eine Verformung aufgrund des indirekten piezoelektrischen Effekts der inaktiven Schicht auslöst.

Ebenso kann der Cantilever bevorzugt ein bimorpher Cantilever sein, welcher vorzugsweise mindestens zwei aktive Schichten umfasst. Dabei kann bevorzugt eine inaktive Schicht zwischen den mindestens zwei aktiven Schichten vorhanden sein. Dabei ist bevorzugt, dass bei Anlegen einer elektrischen Spannung eine aktive Schicht kontrahiert, während die zweite aktive Schicht expandiert, wodurch vorteilhafterweise eine Biegung des Cantilevers erreicht wird, welche insbesondere gegenüber einem unimorphen Cantilever verstärkt ist, also z. B. bei gleicher angelegter Spannung eine größere Amplitude aufweist.

Vorzugsweise umfasst der Cantilever eine Messspitze. Die Messspitze (englisch *tip*) befindet sich dabei bevorzugt im Wesentlichen am freien Ende des Cantilevers. Dabei ist die elektronische Schaltung dazu eingerichtet, den Cantilever und damit auch die Messspitze derart in Schwingungen zu versetzen, dass die Messspitze kontaktlos schwingend an die Mikrofonmembran zu führen, wobei der Abstand so gering ist, dass ein Tunnelstrom zwischen der Mikrofonmembran und der Messspitze fließt. Dabei weisen bevorzugt die Messspitze und die Mikrofonmembran elektrisch leitfähiges Material auf. Bevorzugt ist es auch, dass der Cantilever derart in Schwingungen versetzt wird, dass die Messspitze im Wesentlichen senkrecht kontaktlos schwingend an die Mikrofonmembran geführt wird. Vorzugsweise weist die Messspitze lediglich einige Atomlagen in ihrem spitzen Ende auf. So kann beispielsweise die Messspitze an ihrem spitzen Ende einen Querschnitt von weniger als 50 nm², bevorzugt von weniger als 20 nm², besonders bevorzugt von weniger als 10 nm², aufweisen.

In bevorzugten Ausführungsformen kann die Messspitze als zusätzliche Komponente auf dem Cantilever ausgebildet und mit dem Cantilever verbunden sein. In weiteren bevorzugten Ausführungsformen liegen der Cantilever und die Messspitze als ein gemeinsames Bauteil vor. Vorzugsweise zeichnet sich die Messspitze hinsichtlich ihrer geometrischen Form dadurch aus, dass die Seitenlinien sich an einem gemeinsamen Punkt treffen, wobei dieser gemeinsame Punkt vorzugsweise das spitze Ende der Messspitze ist.

Als Schwingung wird bevorzugt eine wiederholte zeitliche Schwankung von der räumlichen Auslenkung des Cantilevers und damit insbesondere auch der Messspitze von einer Mittelposition bezeichnet. Insbesondere ist die Schwingung im Wesentlichen oder zumindest teilweise periodisch, das bedeutet vor allem zeitlich regelmäßig. Der Cantilever wird durch den Aktuator aktiv zu periodischen Schwingungen angeregt, wobei zur Detektion akustischer Signale die Messspitze kontaktlos schwingend an die Mikrofonmembran geführt wird. Die Schwingung des Cantilevers bzw. der Messspitze erfolgt hiermit bevorzugt unabhängig von den Bewegungen der Membran, wobei die Messspitze jedoch periodisch im Sinne eines *tapping* an die Membran herangeführt wird, ohne diese zu berühren. Eine kontaktlose Schwingung meint mithin bevorzugt, dass der Cantilever derart schwingt, dass die Messspitze während der Schwingung die Mikrofonmembran nicht berührt. Insbesondere wird auch eine Berührung zwischen der Messspitze und der Mikrofonmembran vermieden, wenn die Mikrofonmembran durch das Auftreffen von Schallwellen in Schwingungen versetzt wird. Insbesondere wird ein Kontakt zwischen der Mikrofonmembran und dem Cantilever vermieden, um für den Erhalt eines Tunnelstroms zu sorgen und vorzugsweise einen ohmschen Strom zu vermeiden. Ein Kontakt zwischen der Messspitze und der Mikrofonmembran im *constant height mode* kann beispielsweise derart vermieden werden, dass die Amplitude des Cantilevers und damit der Messspitze entsprechend erwartbaren Auslenkungen der Mikrofonmembran angepasst ist. Im *constant current mode* kann zum Beispiel ein Kontakt zwischen der Messspitze und Mikrofonmembran vermieden werden, indem deren Abstand zueinander durch einen geschlossenen Regelkreis reguliert wird, um einen konstanten Tunnelstrom beizubehalten.

Periodische Schwingungen, insbesondere über mehrere Perioden hinweg betrachtet, können vorzugsweise durch die Schwingungsmode der Schwingung beschrieben werden. Die Schwingungsmode ist vorzugsweise eine Form der Beschreibung bestimmter zeitlich stationärer Eigenschaften einer Schwingung. Verschiedene Schwingungsmoden unterscheiden sich insbesondere in der räumlichen Verteilung der Schwingungsintensität, wobei die Form der Schwingungsmoden vorzugsweise durch Randbedingungen bestimmt wird, unter denen sich die Schwingung ausbreitet. Diese Randbedingungen können z. B. durch das Material, die Abmessungen und/oder die Lagerung des Cantilevers sowie bevorzugt mindestens eines auf den Cantilever einwirkenden Kraftvektors gegeben sein. Die Schwingfähigkeit des Cantilevers bedeutet dabei insbesondere, dass der Cantilever durch einen geeigneten Antrieb in Form eines Aktuators zu einer mechanischen Schwingung über längere Zeit angeregt werden kann, ohne dass es zu strukturellen Veränderungen (Beschädigungen) kommt.

Bei einem schwingenden Cantilever kann es z. B. mehrere Biegeschwingungsmoden geben, bei der sich der Cantilever entlang einer Vorzugsrichtung, z. B. senkrecht zu einer Ebene der Aufhängung des Cantilevers, durchbiegt, die sich in insbesondere in der Schwingungsfrequenz, der maximalen Schwingungsamplitude sowie in dessen räumlichem Auftreten unterscheiden können. Dies korrespondiert insbesondere mit der Schwingung der Messspitze. Eine Biegeschwingungsmode ist dabei insbesondere dadurch gekennzeichnet, dass die Schwingung einen dynamischen Biegeprozess in Richtung im Wesentlichen einer Normalen zu einer Hauptebene des Cantilevers beschreibt. Vorzugsweise wird die Messspitze, die sich bevorzugt am freien Ende befindet, durch die Schwingung periodisch kontaktlos zur Mikrofonmembran geführt, sodass ein Tunnelstrom zwischen der Mikrofonmembran und der Messspitze resultiert.

Dabei ist bevorzugt neben dem Cantilever auch der Aktuator zur Anregung solcher Schwingungen geeignet sein. Insbesondere ist die elektronische Schaltung mit dem Aktuator derart wirkverbunden, dass der Aktuator die Funktion einer aktiven Anregung des Cantilevers erfüllt. Dabei ist bevorzugt mit der aktiven Anregung des Cantilevers eine aktive Schwingungsanregung des Cantilevers gemeint. Insbesondere ist es bevorzugt, dass der Cantilever durch den Aktuator eine erzwungene Schwingung durchführt.

Der Aktuator bezeichnet eine Komponente, die ein elektrisches Signal, bevorzugt ausgehend von der elektronischen Schaltung, in eine mechanische Bewegung und/oder eine Veränderung einer mechanischen Größe umsetzt. Insbesondere greift der Aktuator aktiv darin ein, den Cantilever in Schwingungen zu versetzen. Der Aktuator muss geeignet sein, eine von ihm generierte Kraft auf den Cantilever zu übertragen, z. B. indem er mit dem Cantilever in einer Art in Verbindung steht, welche eine Kraftübertragung ermöglicht.

Vorzugsweise kann der Cantilever auch den Aktuator zumindest teilweise umfassen. Dabei muss die Kraft selber geeignet sein, die Schwingungen auszulösen, was insbesondere bedeutet, dass die Kraft periodisch ist und vorzugsweise im Wesentlichen die Frequenz der zu erzeugenden Schwingungen des Cantilevers aufweist und geeignet ist, den Cantilever und damit auch die Messspitze in Schwingungen zu versetzen, vorzugsweise in einer Schwingungsmode.

Der Tunnelstrom bezeichnet bevorzugt einen elektrischen Strom, der zwischen der Mikrofonmembran und der Messspitze fließt, obwohl sich diese nicht mechanisch berühren. Anders ausgedrückt, ist mit dem Tunnelstrom ein elektrischer Strom gemeint, der trotz einer Barriere zwischen Mikrofonmembran und Messspitze fließt, wobei mit der Barriere insbesondere eine Potentialbarriere gemeint ist, die durch die Lücke durch eine nicht vorliegende Berührung zwischen der Mikrofonmembran und der Messspitze resultiert. Vorzugsweise ist der Tunnelstrom im erfindungsgemäßen Kontext die Messgröße, die eine Detektion des von den Schallwellen abhängigen Schwingungsverhaltens der Mikrofonmembran erlaubt. Bevorzugt ist es mit dem Tunnelstrom möglich, vorteilhafterweise verschiedene Schallgrößen der Schallwellen zu messen, die die Mikrofonmembran zu Schwingungen anregen. Dabei können Schallgrößen wie die Schallauslenkung, der Schalldruck, der Schalldruckpegel, die Schallenergiedichte, die Schallenergie, der Schallfluss, die Schallgeschwindigkeit, die Schallimpedanz, die Schallintensität, die Schallleistung, die Schallschnelle, die Schallamplitude und/oder der Schallstrahlungsdruck mithilfe der Messung des Tunnelstroms bestimmt werden.

Der Tunnelstrom begründet sich mit dem Tunneleffekt, der aus der Quantenmechanik oder Quantenphysik bekannt ist, somit ein quantenmechanischer oder quantenphysikalischer Effekt und mit Gesetzmäßigkeiten der klassischen Physik nicht zu erklären ist. Nach den Gesetzen der klassischen Physik liegt eine Potentialbarriere, d. h. Energiebarriere, zwischen der Messspitze und der Mikrofonmembran vor, die einen Übergang von Ladungsträgern, insbesondere Elektronen, verbietet. Die Potentialbarriere ist insbesondere mit der Austrittsarbeit verbunden.

Aus quantenphysikalischer Sicht wird die zeitliche Veränderung des nichtrelativistischen Systems durch die Schrödingergleichung beschrieben. Nichtrelativistisch meint insbesondere, dass Effekte der Relativitätstheorie hierbei außer Acht gelassen werden können. Die Schrödingergleichung ist eine partielle Differentialgleichung, deren Lösung die Wellenfunktion ist, die wiederrum den Zustand von Teilchen beschreibt, insbesondere deren Aufenthaltsort. Die Wellenfunktion ist auch im "verbotenen" Bereich, also innerhalb und/oder jenseits der Potentialbarriere, nirgends gleich Null, sondern klingt dort mit zunehmender Eindringtiefe exponentiell ab. Auch am Ende des verbotenen Bereiches ist ihr Wert also nicht Null. Da das Betragsquadrat der Wellenfunktion als Wahrscheinlichkeitsdichte für den Ort des Teilchens interpretiert wird, gibt es eine von Null verschiedene Wahrscheinlichkeit für das Teilchen, auf der anderen Seite der Potentialbarriere zu erscheinen. Da dies ein quantenmechanischer Effekt ist, wird der Tunneleffekt auch als quantenphysikalischer oder quantenmechanischer Tunneleffekt bezeichnet.

Zur Nutzung des quantenmechanischen Tunneleffektes zur Erhaltung des Tunnelstroms wird bevorzugt eine elektrische Spannung angelegt, die von einigen mV (Millivolt) bis zu einigen V (Volt) reichen kann. Bevorzugt befindet sich die Messspitze sich während der kontaktlosen Schwingung zur Mikrofonmembran in einem Abstand im Angstrom-Bereich (10⁻¹⁰ m (Meter)) zur Mikrofonmembran. Durch die angelegte Spannung und den geringen Abstand wird fließt ein Tunnelstrom zwischen der Mikrofonmembran und der Messspitze. Der Tunnelstrom ist im Wesentlichen abhängig von dem Abstand, der angelegten Spannung und der Austrittsarbeit der eingesetzten Materialien.

Der messbare Tunnelstrom geht in der Regel mit niedrigen Stromstärken einher, die typischerweise von einigen pA (Pikoampère) bis zu wenigen nA (Nanoamperebereich) und manchmal sogar auch bis zu wenigen mA (Milliamperebereich) reichen. Daher sind selbst geringe Abweichungen der Stromstärke der Tunnelstroms als Messsignal besonders deutlich zu erfassen, da der Tunnelstrom exponentiell vom Abstand abhängt und kleinste Veränderungen des Abstandes zu einer beträchtlichen Änderung des Tunnelstroms als Messsignal führen.

In einer weiteren bevorzugten Ausführungsform ist das MEMS-Mikrofon dadurch gekennzeichnet, dass der Cantilever Schwingungen ausführt mit einer Frequenz von mehr als 20 kHz (Kilohertz), bevorzugt mehr als 50 kHz, besonders bevorzugt mehr als 100 kHz.

Die angegebenen Frequenzen der Schwingung des Cantilevers sind bevorzugt um ein Vielfaches höher als die erwartbaren Schwingungen der Mikrofonmembran, die durch das Auftreffen von Schallwellen resultieren. Die Frequenz der Schwingung des Cantilevers ist bevorzugt um einen Faktor von mindestens 2, 3, 4, 5, 10, 15, 20, 50, 100, 200, 500, 1000 oder mehr höher als mögliche Frequenzen der Mikrofonmembran.

Vorteilhafterweise ist das Schwingungsverhalten des Cantilevers durch die angegebenen Frequenzen seiner Schwingung unabhängig von der Schwingung der Mikrofonmembran. Dies führt vorteilhaft dazu, dass die Mikrofonmembran in einem weiten Frequenzbereich schwingen kann und weiterhin eine zuverlässige Detektion eines akustischen Signals durch den Tunnelstrom gegeben ist. Da es bevorzugt ist, dass der Cantilever eine vielfach höhere Schwingung als die der Mikrofonmembran ausführt, ist dauerhaft, zuverlässig und mit hoher Genauigkeit die Messung von Schallereignissen möglich. Die angegebenen Frequenzen haben sich dabei als besonders effizient erwiesen, um einfach und effektiv einen Tunnelstrom zwischen der Mikrofonmembran und der Messspitze zu generieren und zu messen. Vorteilhafterweise kann mittels des erfindungsgemäßen MEMS-Mikrofons ein großer Frequenzbereich der Mikrofonmembran präzise erfasst werden, insbesondere von sehr niedrige Frequenzen (<10Hz) bis hin zu hohen Frequenzen im kHz oder sogar MHz-Bereich.

In einer weiteren bevorzugten Ausführungsform ist das MEMS-Mikrofon dadurch gekennzeichnet, dass die elektronische Schaltung dazu eingerichtet ist, dass eine Amplitude und eine Mittelposition einer Schwingung der Messpitze und/oder des Cantilevers konstant gehalten wird, wobei eine Änderung einer Amplitude des Tunnelstroms zwischen der Mikrofonmembran und der Messspitze gemessen wird, wobei die Amplitude des Tunnelstroms von dem Schwingungsverhaltens der Mikrofonmembran abhängt.

Die Ausführungsform in dem zuletzt offenbarten Absatz entspricht in Analogie zur Rastertunnelmikroskopie dem sogenannten Modus konstanter Höhe (englisch *contant height mode*). Dabei folgt beim Rastertunnelmikroskop die Messspitze einem zuvor vorgegebenes Höhenprofil, ohne das der Abstand zwischen einer zu untersuchenden Probe und der Messspitze des Rastertunnelmikroskops nachreguliert werden muss.

Das Prinzip des Modus konstanter Höhe kann vorteilhaft für eine erfindungsgemäße Detektion von Schallereignissen durch einen Tunnelstrom auf das MEMS-Mikrofon übertragen werden. Hierbei ist bevorzugt die elektronische Schaltung dazu eingerichtet, dass das die Amplitude und die Mittelposition des Cantilevers und/oder der Messspitze sich nicht ändert. Eine Mittelposition des Cantilevers und/oder der Messspitze bezeichnet bevorzugt eine räumliche Position, die als Bezugsstelle für die Amplitude der Schwingung dient. Die Amplitude der Schwingung ist vorzugsweise die maximale Auslenkung des Cantilevers und/oder die maximale Verschiebung der Messspitze um die Mittelposition. Die Amplitude, insbesondere die maximale Auslenkung, kann bevorzugt durch eine Größe mit der Dimension eines Abstandes angegeben werden. Vorzugsweise wird die Amplitude derart eingestellt, dass im Hinblick auf erwartbare Auslenkungen der Mikrofonmembran die Vermeidung eines Kontaktes zwischen der Mikrofonmembran und der Messspitze vermieden wird.

In bevorzugten Ausführungsformen führt der Cantilever und damit insbesondere auch die Messspitze Schwingungen aus, die Auslenkungen im Bereich von pm (Pikometer) bis zu nm (Nanometer) und µm (Mikrometer) ausüben.

Zur Veranschaulichung des Messprinzips werden zwei Fälle betrachtet, nämlich einen theoretischen Fall, in dem die Mikrofonmembran nicht durch Schallwellen zu einer Schwingung angeregt wird, sondern im Wesentlichen ortsfest ist, und den tatsächlichen Fall einer Schwingungsanregung der Mikrofonmembran durch Schallwellen.

Im theoretischen Fall, in dem die Mikrofonmembran im Wesentlichen keine Schwingungen vollführt, gibt es einen festen Abstand zwischen der Mikrofonmembran und der Mittelposition des Cantilevers und/oder der Messspitze, sofern der Cantilever und damit auch die Messspitze Schwingungen mit einer konstanten Amplitude um eine gleichbleibende Mittelposition ausführt. Damit weist auch der Tunnelstrom eine gleichmäßige Amplitude auf, da sich der Abstand zwischen der Mikrofonmembran und der Messspitze lediglich im Rahmen der Schwingung des Cantilevers ändert.

Durch Schallwellen, welche durch die Schalleintrittsöffnung auf die Mikrofonmembran treffen, wird diese in Schwingungen versetzen. Durch die Schwingungen der Mikrofonmembran gibt es nun keinen festen Abstand zwischen der Mittelposition des Cantilevers und/oder der Messspitze und der Mikrofonmembran. Insbesondere verändert sich der Abstand zwischen der Mikrofonmembran und der Messspitze in Abhängigkeit von dem Schwingungsverhalten der Mikrofonmembran. Dabei gilt, je höher der Schalldruckpegel ist, desto stärker wird die Mikrofonmembran ausgelenkt. Je stärker die Mikrofonmembran ausgelenkt wird, desto geringer ist wiederrum der Abstand zwischen der Messspitze und der Mikrofonmembran, sodass sich der messbar erhöht Tunnelstrom.

Umgekehrt gilt, je geringer der Schalldruckpegel auftreffender Schallwellen ist, desto schwächer ist die Auslenkung der Mikrofonmembran und umso niedriger ist auch der Tunnelstrom.

Die Änderungen der Signalstärke des Tunnelstroms reflektieren somit unmittelbar das von auftreffenden Schallwellen abhängige Schwingungsverhalten der Mikrofonmembran.

Vorteilhafterweise ist das Messprinzip einer konstanten Höhe unter Einhalten einer konstanten Amplitude und Mittelposition der Schwingung der Cantilevers und/oder der Messspitze besonders einfach einzurichten und erlaubt auf robuste Weise eine hochfrequente Schwingungsanregung des Cantilevers.

In einer weiteren bevorzugten Ausführungsform ist das MEMS-Mikrofon dadurch gekennzeichnet, dass die elektronische Schaltung dazu eingerichtet ist, dass eine Amplitude des Tunnelstroms zwischen der Mikrofonmembran und der Messspitze konstant gehalten wird, wobei eine Schwingung des Cantilevers und/oder der Messspitze reguliert wird, um einen Abstand zwischen der Mikrofonmembran und einer Mittelposition der Messspitze konstant zu halten.

Die Ausführungsform in dem zuletzt offenbarten Absatz entspricht in Analogie zur Rastertunnelmikroskopie dem sogenannten Modus konstanten Tunnelstroms (englisch *contant current mode*)*.* Dabei wird die Höhe der Messspitze fortlaufend soweit verändert, dass der Tunnelstrom konstant bleibt. Dies geschieht beim Rastertunnelmikroskop über einen geschlossenen Regelkreis zur Regelung des Abstandes zwischen der Messspitze und der zu untersuchenden Probe.

Das Prinzip des Modus eines konstanten Tunnelstroms aus der Rastertunnelmikroskopie kann vorteilhaft auf eine erfindungsgemäße Detektion von Schallereignissen durch einen Tunnelstrom übertragen werden. Dabei ist es bevorzugt, dass die elektronische Schaltung dazu eingerichtet ist, die Amplitude des Tunnelstrom zwischen der Mikrofonmembran und der Messspitze konstant zu halten. Dazu wird die Schwingung des Cantilevers und/oder der Messspitze derart reguliert, dass der Abstand zwischen einer Mikrofonmembran und einer Mittelposition des Messspitze kontant bleibt.

Die Mittelposition der Messspitze bezeichnet insbesondere die Bezugsstelle für die Amplitude der Schwingung der Messspitze. Die Mittelposition des Cantilevers muss dabei nicht mit der Mittelposition der Messspitze identisch sein. Die Messspitze befindet sich bevorzugt im Wesentlichen am freien Ende des Cantilevers und weist auch eine gewisse räumliche Ausdehnung auf. Somit ist mit der Mittelposition der Messspitze diejenige Position gemeint, mit der die Amplitude der Schwingung der Messspitze beschrieben werden kann. Da der Cantilever die Messspitze umfasst und schwingt, weist die Messspitze ein gleiches Schwingungsmuster wie der Cantilever auf, d. h. der Verlauf der Schwingung ist im Wesentlichen gleich.

Dabei ist es bevorzugt, dass die Amplitude des Tunnelstroms konstant bleibt, indem der Abstand zwischen der Mittelposition der Messspitze und der Mikrofonmembran konstant gehalten wird. Vorzugsweise erfolgt dies durch einen geschlossenen Regelkreis. Bevorzugt wird durch den geschlossenen Regelkreis der Tunnelstrom bei einer Schwingung, insbesondere einer Auslenkung, der Mikrofonmembran auf eine vorgegebene Amplitude angepasst. Vorzugsweise erfolgt dies durch eine Anpassung des Abstandes der Mittelposition der Messspitze und den Auslenkungen der Mikrofonmembran. Dabei ist der geschlossene Regelkreis eine Schaltung, die beispielsweise durch die elektronische Schaltung des MEMS-Mikrofons konfiguriert sein kann. Der geschlossene Regelkreis führt dabei die Aufgaben Messen, Vergleichen und Anpassen aus. Damit wird durch den geschlossenen Regelkreis der Tunnelstrom gemessen, die Amplitude des gemessenen Tunnelstroms mit einem vorgegebenen Wert verglichen und bei einer Abweichung entsprechend angepasst. Vorzugsweise erfolgt eine Anpassung der Amplitude des Tunnelstroms durch eine Anpassung der Mittelposition der Messspitze. Dazu ist es bevorzugt, dass der Cantilever (umfassend der Messspitze) eine Translationsbewegung ausführt, um die Abstandsanpassung zwischen Messspitze und Mikrofonmembran vorzunehmen. Bevorzugt erfolgt eine solche Translationsbewegung des Cantilevers durch einen weiteren Aktuator. In bevorzugten Ausführungsformen kann der weitere Aktuator zur Durchführung der Translationsbewegung des Cantilevers ein MEMS-basierter Antrieb sein. Beispielsweise kann ein MEMS-Antrieb ein Mikroaktor sein, die durch Koppelelemente mit dem Cantilever verbunden ist.

Zur Veranschaulichung des Messsprinzips werden, wie weiter oben auch, zwei Fälle betrachtet, nämlich ein idealisierter Fall, in dem die Mikrofonmembran im Wesentlichen keine Schwingungen ausführt und ein tatsächlicher Fall, in dem die Mikrofonmembran durch Schallwellen zu Schwingungen angeregt wird.

Im theoretischen Fall, in dem die Mikrofonmembran im Wesentlichen keine Schwingungen ausführt, ändert sich der Abstand zwischen der Mittelposition der Messspitze und der Mikrofonmembran nicht. Der Tunnelstrom weist eine gleichbleibende Amplitude auf. Durch den geschlossenen Regelkreis wird erkannt, dass es nicht notwendig ist, den Abstand zwischen der Mittelposition der Messspitze und der Mikrofonmembran anzupassen, da es keine Abweichung gibt von einer vorgegebenen Amplitude des Tunnelstroms.

Sofern Schallwellen durch die Schalleintrittsöffnung auf die Mikrofonmembran treffen, wird diese in Schwingungen versetzt. Durch die Schwingungen der Mikrofonmembran wird zunächst der Abstand zwischen der Mikrofonmembran und der Mittelposition der Messspitze verändert. Dies wirkt sich auch auf den Tunnelstrom aus, insbesondere weicht die Amplitude des Tunnelstroms von einem vorgegebenen Wert ab. Durch den geschlossenen Regelkreis wird eine Veränderung der Amplitude des Tunnelstroms erkannt. Insbesondere kann durch den geschlossenen Regelkreis ein Vergleich zwischen dem vorgegebenen und dem gemessenen Tunnelstrom vorgenommen werden, beispielsweise durch die Bildung einer Differenz und/oder eines Verhältnisses. Um daraufhin den Tunnelstrom auf den vorgegebenen Wert zurückzuregeln, wird der Abstand der Mittelposition der Messspitze insofern angepasst, dass die vorgegebene Amplitude des Tunnelstroms wieder erreicht wird.

Dabei gilt, je höher der Schalldruckpegel ist, desto stärker wird auch die Mikrofonmembran ausgelenkt. Je stärker die Mikrofonmembran ausgelenkt wird, desto stärker verändert sich der Abstand zwischen der Mittelposition der Messspitze und der Mikrofonmembran, welcher anhand der Regelgröße eines konstant zu haltenden Tunnelstroms angepasst werden muss.

Umgekehrt gilt auch, je geringer der Schalldruckpegel der auftreffenden Schallwelle ist, desto schwächer ist auch die Auslenkung der Mikrofonmembran. Je schwächer die Mikrofonmembran ausgelenkt wird, desto geringer verändert sich der Abstand der Mittelposition der Messspitze und der Mikrofonmembran, welcher anhand des gemessenen Tunnelstroms reguliert werden muss.

Die Regelung des Abstandes anhand der Regelgröße des konstant zu haltenden Tunnelstroms erlaubt vorteilhaft mit besonders hoher Sensitivität und Genauigkeit Schallsignale zu vermessen. Durch einen geschlossen Regelkreis kann zudem eine sehr präzise Nachverfolgung des Schwingverhaltens der Mikrofonmembran erfolgen, welches nicht nur Rückschlüsse auf Frequenz und Schalldruckpegel der Schallsignale, sondern den gesamten zeitlichen Verlauf erfasst.

In einer weiteren bevorzugten Ausführungsform ist das MEMS-Mikrofon dadurch gekennzeichnet, dass die elektronische Schaltung dazu eingerichtet ist, eine Vorspannung an der Mikrofonmembran anzulegen, sodass eine Nullpunktslage und/oder Schwingfähigkeit der Mikrofonmembran reguliert werden kann.

Vorteilhafterweise kann durch das Anlegen einer Vorspannung an der Mikrofonmembran die Sensitivität der Mikrofonmembran reguliert und/oder angepasst werden. Dabei bezeichnet eine Vorspannung im Sinne der Erfindung eine elektrische Spannung, die angelegt wird, sodass die Mikrofonmembran eine Wölbung erlangt, die eine Nullpunktslage der Mikrofonmembran überragt. Die Nullpunktslage der Mikrofonmembran bezeichnet bevorzugt die kräftefreie Ruhepostion der Mikrofonmembran, wenn keine Auslenkung durch Schallwellen erfolgt und keine Vorspannung anliegt. Somit kann durch das Anlegen einer Vorspannung die Positionierung der Mikrofonmembran von der Nullpunktslage abweichen und/oder dazu führen, dass die Mikrofonmembran eine Wölbung aufweist, die von der Nullpunktslage abweicht. Dabei ist es bevorzugt, dass die Vorspannung durch die elektronische Schaltung reguliert werden kann.

Vorteilhafterweise erlaubt das Anlegen einer Vorspannung die Sensitivität der Mikrofonmembran zu regulieren. Wird eine Vorspannung angelegt, wirkt sich dies auf die Schwingfähigkeit der Mikrofonmembran aus. Je höher die angelegte Vorspannung ist, desto geringer ist die Schwingfähigkeit der Mikrofonmembran. Je geringer die angelegte Vorspannung ist, desto höher ist die Schwingfähigkeit der Mikrofonmembran. Somit kann insbesondere die Sensitivität der Mikrofonmembran vorteilhafterweise präzise angepasst werden.

Die Sensitivität der Mikrofonmembran bezeichnet vorzugsweise die Fähigkeit, eine Auslenkung zu erfahren, wobei die Auslenkung abhängig ist von den Schalldruckpegeln der durch die Schalleintrittsöffnung eintretenden Schallwellen.

Die Regulierung der Schwingfähigkeit der Mikrofonmembran ist dahingehend vorteilhaft, dass insbesondere im Hinblick auf die kleinen Abstände beim Auftreten eines Tunnelstroms eine optimale Anpassung des MEMS-Mikrofons auf unterschiedliche Schalldruckpegel gewährleistet werden kann. So weist das erfindungsgemäße MEMS-Mikrofon eine hohe Dynamik auf und eignet sich vorteilhaft für einen breiten Bereich zu messender Schallsignale.

In einer weiteren bevorzugten Ausführungsform ist das MEMS-Mikrofon dadurch gekennzeichnet, dass das MEMS-Mikrofon eine Sensitivität aufweist, welche es erlaubt, Schalldruckwellen mit einem Schalldruckpegel von weniger als 20 dB, besonders bevorzugt weniger als 10 dB, weniger als 5 dB, weniger als 1 dB oder weniger als 0 dB zu messen.

Vorteilhafterweise kann das erfindungsgemäße MEMS-Mikrofon mit äußerster Präzision niedrige Schalldruckpegel, wie eben angegebenen, messen. Der Schalldruckpegel (englisch sound pressure level, abgekürzt mit SPL) ist der dekadische Logarithmus des quadratischen Verhältnisses zwischen dem Effektivwert des gemessenen Schalldrucks und seinem in der Akustik gebräuchlichen Bezugswert von 20 µPa (Mikropascal). Dabei können vorteilhaft Schalldruckpegel mit großem Signal-Rausch-Verhältnis gemessen werden.

Es ist weiterhin vorteilhaft, dass durch das erfindungsgemäße kompakte MEMS-Mikrofons Schallereignisse trotz niedrigem Schalldruckpegels mit hoher Auflösung gemessen werden können. Die laterale Auflösung bezeichnet hierbei bevorzugt eine Auflösung quer zum Verlauf eines Messweges mittels Schallwellen. Das Gegenteil der lateralen Auflösung ist die axiale Auflösung entlang des Längsverlaufs des Messweges, d.h. der Strecke des Schalls. Insbesondere ist die laterale Auflösung der Abstand zweier nebeneinander gelegenen Objekte, z. B. zwei Schallquellen, die als zwei Punkte abgebildet werden können. Hierdurch wird es vorteilhafterweise ermöglicht, ein sehr genaues Bild eines Schallfeldes zu erstellen, trotz niedriger Schalldruckpegel.

Niedrige Schalldruckpegel sind zudem insbesondere relevant im Rahmen der photoakustischen Spektroskopie, sodass das erfindungsgemäße MEMS-Mikrofon vorzugsweise bei photoakustischen Messungen effizient eingesetzt werden kann. Ebenfalls sind weitere vorteilhafte Einsätze des erfindungsgemäßen MEMS-Mikrofons möglich. Geringe Schalldruckpegel können auch durch Maschinen, wie z. B. Beleuchtungsarmaturen, entstehen. Damit eignet sich das erfindungsgemäße MEMS-Mikrofon vorteilhaft zur Überwachung von Geräten, bei denen geringe Schalldruckpegel relevant sind. Vorteilhafterweise kann das MEMS-Mikrofon in einer Vielzahl von möglichen Anwendungen optimal und effizient eingesetzt werden.

In einer weiteren bevorzugten Ausführungsform ist das MEMS-Mikrofon dadurch gekennzeichnet, dass die elektronische Schaltung dazu eingerichtet ist, dass der Aktuator die Schwingung des Cantilevers derart reguliert, dass zwischen maximalen Auslenkungen der Messspitze und der schwingfähigen Mikrofonmembran ein Abstand zwischen 0,1 nm und 100 nm vorliegt. Auch Zwischenwerte wie beispielsweise maximale Abstände zwischen 1 nm und 50 nm oder 0,5 nm und 10 nm können bevorzugt.

Der Abstandbereich zwischen der Messspitze und der Mikrofonmembran wird insbesondere durch die Mittelposition der Schwingung des Cantilevers und/oder der Amplitude der Schwingungsanregung reguliert. Der genannte Abstandsbereich hat sich als besonders vorteilhaft erwiesen, um einerseits mittels des Tunnelstroms das Schwingungsverhalten der Membran hochaufgelöst messen zu können und andererseits einen Kontakt zwischen Messspitze und Membran effektiv zu vermeiden. Das erfindungsgemäße MEMS-Mikrofon zeichnet sich mithin durch eine langzeitstabile Messfähigkeit aus.

In einer weiteren bevorzugten Ausführungsform ist das MEMS-Mikrofon dadurch gekennzeichnet, dass der Aktuator den Cantilever umfassend der Messspitze zu Schwingungen anregt, wobei bevorzugt der Aktuator ausgewählt ist aus einer Gruppe umfassend ein piezoelektrischer Aktuator, ein elektrostatischer Aktuator, ein elektromagnetischer Aktuator, ein magnetostriktiver Aktuator und/oder ein thermischer Aktuator.

Die vorstehend genannten Aktuatoren sind dabei besonders gut geeignet für eine Anregung einer großen Zahl schneller Schwingungen und weisen insbesondere aufgrund des kompakten Aufbaus einen geringen Energiebedarf auf. Auch ist die Bandbreite der erzielbaren Schwingungen aufgrund des kompakten Aufbaus und der geringen Trägheiten vorteilhafterweise hoch.

Vorzugsweise ist der Aktuator ein MEMS-Aktuator. Ein MEMS-Aktuator ist bevorzugt ein Aktuator, der mithilfe von üblichen Herstellungsmethoden der Mikrosystemtechnik hergestellt wird und des Weiteren Abmessungen in der Größenordnung µm (Mikrometer) aufweist. Ein solcher Aktuator ist besonders kompakt, robust und wartungsarm und lässt sich einfach und kostengünstig herstellen. Insbesondere kann der Cantilever, welcher durch den Aktuator zu Schwingungen angeregt wird, ebenfalls ein MEMS-Element sein. Das heißt bevorzugt, dass der Cantilever und der Aktuator vorzugsweise in einem Herstellungsschritt mit dem MEMS-Aktuator herstellbar und kompakt sind. Es kann dabei wünschenswerterweise in Teilen das gleiche Substrat zur Herstellung verwendet werden. Dies vereinfacht und verbilligt die Herstellung erheblich.

Ein piezoelektrischer Aktuator bezeichnet bevorzugt einen Aktuator, der den piezoelektrischen Effekt nutzt. Insbesondere kann ein piezoelektrischer Aktuator unter Nutzung des inversen piezoelektrischen Effekt den Cantilever zu Schwingungen anregen. Der piezoelektrische Effekt umfasst den direkten piezoelektrischen Effekt, der das Auftreten einer elektrischen Spannung bei der Verformung von bestimmten Festkörpern, insbesondere von Piezokristallen, beschreibt, und den inversen piezoelektrischen Effekt, bei dem durch Anlegen einer elektrischen Spannung eine Verformung herbeigeführt wird. Bevorzugt umfasst ein piezoelektrischer Aktuator ein Piezokristall, der sich nach Anlegung einer elektrischen Spannung verformt. Je nach Piezokristall und Schnitt wird er länger, breiter und/oder verbiegt sich.

Ein elektrostatischer Aktuator setzt vorzugsweise elektrostatische Felder ein, um Komponenten, insbesondere den Cantilever, zu bewegen. Dazu weist vorzugsweise der Cantilever ein Material auf, der auf die eingesetzten elektrostatischen Felder reagiert. Ein elektromagnetischer Aktuator wandelt elektrische Energie in mechanische Energie um. Dabei werden vorzugsweise Effekte des Elektromagnetismus eingesetzt. Bei einem thermischen Aktuator wird vorzugsweise eine Wärmequelle verwendet, um insbesondere Bewegungen des Cantilevers zu erzeugen.

Magnetostriktive Aktuatoren basieren bevorzugt auf der Längenänderung von ferromagnetischen Materialien. Magnetorestriktive Aktuatoren sind vorzugsweise durch Sintertechniken hergestellt und verändern unter Magnetfeldern ihre Länge. Diese Aktuatoren können vorteilhaft auch unter hohen Drücken und Temperaturen als Stellelemente mit hoher Positionierungsgenauigkeit im Mikrometer-Bereich eingesetzt werden.

In einer weiteren bevorzugten Ausführungsform ist das MEMS-Mikrofon dadurch gekennzeichnet, dass die schwingfähige Mikrofonmembran ein elektrisch leitfähiges Material umfasst, wobei bevorzugt das elektrische leitfähige Material ausgewählt ist aus einer Gruppe umfassend Monosilizium, Polysilizium, Molybdän, Tantal, Aluminium, Graphit, Wolfram, Titan, Platin, Gold, Palladium, Eisen, Kupfer, Silber, Messing, Chrom, deren Verbindungen und/oder Legierungen, wobei optional die schwingfähige Mikrofonmembran ein zusätzliches nicht elektrisch leifähiges Material umfasst, welches bevorzugt ausgewählt ist aus einer Gruppe umfassend Siliziumnitrid und/oder Siliziumdioxid.

Diese Materialien sind in der Halbleiter- und/oder Mikrosystemherstellung einfach und kostengünstig zu bearbeiten und eignen sich für eine Herstellung im großen Maßstab. Die Mikrofonmembran kann aufgrund der Materialien und/oder Herstellungsweisen vorteilhaft flexibel hergestellt werden. Insbesondere ist bevorzugt eine Herstellung des MEMS-Mikrofons umfassend der schwingfähigen Mikrofonmembran zusammen mit einem Träger in einem (Halbleiter-)prozess, bevorzugt auf einem Substrat, möglich. Hierdurch wird die Herstellung weiter vereinfacht und verbilligt, sodass kostengünstig ein kompaktes und robustes MEMS-Mikrofon bereitgestellt werden kann.

Zudem sind die aufgezählten Materialien dahingehend vorteilhaft, dass sie sich durch ein besonders inertes Verhalten auszeichnen. Durch die Inertheit reagieren sie nicht mit der Umgebung, in der das erfindungsgemäße MEMS-Mikrofon angebracht werden soll, sodass vorteilhaft ein besonders robustes und unempfindliches MEMS-Mikrofon bereitgestellt werden kann.

Vorzugsweise wird hierbei elektrisch leitfähiges Material eingesetzt, um insbesondere den Erhalt des Tunnelstroms zu gewährleisten.

Ebenfalls ist es bevorzugt, die Mikrofonmembran mit halbleitenden und/oder dielektrischen Materialien zu versehen. Dielektrische Materialien meinen vorzugsweise elektrisch nichtleitende Materialien. Insbesondere dielektrische Materialien werden vorzugsweise derart in die Mikrofonmembran eingebracht, sodass sie innerhalb der Mikrofonmembran eingebettet vorliegen. Vorteilhafterweise führen die bevorzugt eingesetzten halbleitenden und/oder dielektrischen Materialien in der Mikrofonmembran dazu, dass diese vorteilhaft mechanisch gestützt wird. Vorteilhaft kann hierüber ebenfalls die Sensitivität und damit die Schwingfähigkeit der Mikrofonmembran angepasst werden.

In einer weiteren bevorzugen Ausführungsform ist das MEMS-Mikrofon dadurch gekennzeichnet, dass der Cantilever und/oder die Messspitze ein Material umfasst ausgewählt aus einer Gruppe umfassend Silizium, Iridium, Wolfram, Platin, Palladium und/oder Gold.

Diese Materialien weisen vorteilhaft die gewünschten elektrischen, mechanischen und/oder thermischen Eigenschaften auf, um besonders effizient einen Tunnelstrom zwischen der Mikrofonmembran und der Messspitze fließen zu lassen. Des Weiteren lassen sich die Materialien sehr leicht und kostengünstig verarbeiten, um den Cantilever und/oder die Messspitze bereitzustellen.

Insbesondere im Hinblick auf die Bereitstellung der Messspitze hinsichtlich der Dimensionierung ist der Tunnelstrom relevant. Insbesondere kann die Messspitze dergestalt ausgebildet werden, dass ein Atom die vorderste Spitze der Messspitze und/oder für den größten Teil des Tunnelstroms verantwortlich ist.

In einer weiteren bevorzugten Ausführungsform ist das MEMS-Mikrofon dadurch gekennzeichnet, dass die Messspitze einen Radius von bis zu 15 nm, bevorzugt bis zu 10 nm, besonders bevorzugt bis zu 5 nm aufweist.

In einer weiteren bevorzugten Ausführungsform ist das MEMS-Mikrofon dadurch gekennzeichnet, dass der Cantilever eine Länge von bis zu 1000 µm Länge, eine Breite von bis zu 100 µm Breite und eine Dicke von bis zu 10 µm aufweist.

Die aufgezählten Ausmaße des Cantilevers und/oder der Messspitze haben sich dahingehend als vorteilhaft erwiesen, dass sie einerseits besonders zuverlässig einen Tunnelstrom zwischen der Mikrofonmembran und der Messspitze ermöglichen und andererseits besonders optimal schwingfähig ausgebildet sind, sodass die Führung zur Mikrofonmembran besonders effizient durchführbar ist, beispielsweise durch den Aktuator.

Der durchschnittliche Fachmann erkennt, dass technische Merkmale, Definitionen und Vorteile bevorzugter Ausführungsformen, welche für das erfindungsgemäße MEMS-Mikrofon zur Detektion akustischer Signale gelten, auch für ein Verfahren zur Detektion akustischer Signale umfassend des erfindungsgemäßen MEMS-Mikrofons gelten und umgekehrt.

In einem weiteren Aspekt betrifft die Erfindung ein Verfahren zur Detektion akustischer Signale umfassend ein MEMS-Mikrofon umfassend eine Schalleintrittsöffnung, eine schwingfähige Mikrofonmembran und eine elektronische Schaltung, wobei durch die Schalleintrittsöffnung eintretende Schallwellen die schwingfähige Mikrofonmembran zu Schwingungen anregen, dadurch gekennzeichnet, dass das MEMS-Mikrofon einen Cantilever umfassend eine Messspitze und einen Aktuator aufweist, wobei der Cantilever und/oder die Messspitze durch den Aktuator aktiv zu Schwingungen angeregt wird und kontaktlos schwingend an die Mikrofonmembran geführt wird, sodass ein Tunnelstrom zwischen der Messspitze und der Mikrofonmembran gemessen wird und der Tunnelstrom eine Detektion des von den Schallwellen abhängigen Schwingungsverhaltens der Mikrofonmembran erlaubt.

Das Verfahren zur Detektion akustischer Signale umfassend des erfindungsgemäßen MEMS-Mikrofons erlaubt vorteilhaft eine hochaufgelöste Messung niedriger Schalldruckpegel. So können Schalldruckpegel gemessen, die insbesondere weniger als 20 dB (Dezibel), bevorzugt weniger als 10 dB, besonders bevorzugt weniger als 5 dB, ganz besonders bevorzugt weniger als 1 dB betragen.Dabei ist es besonders vorteilhaft, dass die niedrigen Schalldruckpegel mit einem besonders hohen Signal-Rausch-Verhältnis messbar sind..

Der durchschnittliche Fachmann weiß, dass das Signal-Rausch-Verhältnis das Verhältnis vom eigentlichen Signalanteil zu Rauschanteil beschreibt. Durch die Angabe in dB lässt sich das Signal-Rausch-Verhältnis besser quantifizieren. Als Rauschen wird jegliche Störung bezeichnet, welche die Signale beeinträchtigen kann. Somit lässt sich mithilfe des Signal-Rausch-Verhältnisses die Empfangsqualität der aufgenommenen Signale bewerten. Je größer das Signal-Rausch-Verhältnis ist, desto kleiner ist der Rauschanteil gegenüber dem Nutz- bzw. Messsignal und umso leichter kann er ausgefiltert werden. Gerade im Kontext der Messung von niedrigen Schalldruckpegel war das Signal-Rausch-Verhältnis im Stand der Technik nicht hoch, da der Einfluss des Rauschens höher gewichtet wird. Daher ist es als besonders vorteilhaft zu bewerten, dass das erfindungsgemäße MEMS-Mikrofon auch bei niedrige Schalldruckpegel mit vergleichsweise hohem Signal-Rausch-Verhältnis messen kann.

Durch die Messung mithilfe eines Tunnelstroms ist vorteilhaft eine überaus sensitive Messung möglich, da bereits geringste Abweichungen deutlich erkennbar sind, insbesondere durch geringe Dimensionierung der Stromstärke des Tunnelstroms.

Gleichzeitig kann vorteilhaft eine Berührung zwischen der Messspitze und der Mikrofonmembran vermieden werden, sodass eine zuverlässige, langzeitstabile und sichere Messung des Schwingungsverhaltens der Mikrofonmembran und damit der aufzutreffenden Schallwellen ermöglicht wird.

Zudem kann vorteilhaft die Messung ohne Strömungsverluste des Fluids durchgeführt werden, in dem sich der Schall ausbreitet, sodass ein besonders genaues Bild des Schallfeldes ermöglicht wird.

In einem weiteren Aspekt betrifft die Erfindung die Verwendung des erfindungsgemäßen MEMS-Mikrofons oder bevorzugten Ausführungsformen davon für die photoakustische Spektroskopie.

In einem weiteren Aspekt betrifft die Erfindung einen photoakustischer Gassensor umfassend
- einen modulierbaren Emitter,
- ein mit Gas befüllbares Analysevolumen und
- ein erfindungsgemäßes MEMS-Mikrofon oder eine bevorzugte Ausführungsform davon
wobei der modulierbare Emitter und das MEMS-Mikrofon derart angeordnet sind, dass der Emitter mittels modulierbar emittierbarer Strahlung Gas in dem Analysevolumen zur Ausbildung von Schalldruckwellen anregen kann, welche mit Hilfe des MEMS-Sensors detektierbar sind.

Der durchschnittliche Fachmann erkennt, dass technische Merkmale, Definitionen und Vorteile bevorzugter Ausführungsformen des erfindungsgemäßen MEMS-Mikrofon auch für das erfindungsgemäße Verfahren bzw. Verwendung sowie für einen photoakustischer Gassensor umfassend ein beschriebenes MEMS-Mikrofon gelten und umgekehrt.

Ein photoakustischer Gassensor ist dem Fachmann dabei in seinen Grundzügen bzw. wesentlichen Komponenten bekannt. Ein modulierbarer Emitter erzeugt elektromagnetische Strahlung und ist bevorzugt so angeordnet und konfiguriert, dass die von dem Infrarot-Emitter emittierte Strahlung im Wesentlichen oder zumindest teilweise auf das Gas in dem Analysevolumen trifft.

Erfolgt die modulierte Bestrahlung mit einer Wellenlänge, welche dem Absorptionsspektrum eines in dem Gasgemisch befindlichen Moleküls einer Gaskomponente entspricht, findet eine modulierte Absorption statt, die zu Erwärmungs- und Abkühlungsprozessen führt, deren Zeitskalen die Modulationsfrequenz der Strahlung widerspiegeln. Gemäß dem photoakustischen Effekt führen die Erwärmungs- und Abkühlungsprozesse zu Expansionen und Kontraktion der Gaskomponente wodurch diese zur Ausbildung von Schalldruckwellen mit im Wesentlichen der Modulationsfrequenz angeregt wird. Die Schalldruckwellen werden auch als PAS-Signale bezeichnet und lassen sich mittels des MEMS-Mikrofons wie beschrieben besonders sensitiv messen. Die Leistung der Schallwellen ist dabei vorzugsweise direkt proportional zur Konzentration der absorbierenden Gaskomponente. Aufgrund der Möglichkeit der Messung äußerst niedriger Schallpegeldrücke mittels des erfindungsgemäßen MEMS-Mikrofons können vorteilhaft auch kleinste Anteile von Gaskomponenten detektiert werden.

Verschiedene Emitter kommen bevorzugt als Strahlungsquelle für die genannten Anwendungen in Frage. Es können beispielsweise schmalbandige Laserquellen verwendet werden. Diese erlauben vorteilhafterweise die Verwendung hoher Strahlungsintensitäten und können mit Standardkomponenten für die photoakustische Spektroskopie vorzugsweise hochfrequent moduliert werden. Bevorzugt können ebenso breitbandige Emitter verwendet werden. Diese weisen vorteilhafterweise ein breites Spektrum auf, welches sich z. B. durch den Einsatz von (durchstimmbaren) Filtern weiter selektieren lässt. Bevorzugt ist der modulierbare Emitter eine modulierbarer Infrarotemitter.

In einer Ausführungsform kann der modulierbare Emitter ein thermischer Emitter sein umfassend ein Heizelement, wobei das Heizelement ein Substrat umfasst, auf welchem mindestens teilweise eine erhitzbare Schicht aus einem leitfähigen Material aufgebracht ist, an welchem Kontakte für eine Strom- und/oder Spannungsquelle vorliegen. Dabei umfasst das Heizelement eine erhitzbare Schicht aus einem leitfähigen Material, welches bei Durchfluss eines elektrischen Stroms joulesche Wärme produziert. Das Heizelement umfasst insbesondere ein Substrat, auf dem die erhitzbare Schicht vorliegt. Das Substrat bildet bevorzugt die Basis des Heizelements. Dabei kann das Substrat auch weitere Elemente des IR-Emitters, wie beispielsweise Grundelement und/oder Gehäuseelemente zumindest teilweise umfassen.

Der Emitter ist modulierbar, das bedeutet, dass die Intensität der emittierten Strahlung, bevorzugt die Intensität des Strahls im zeitlichen Verlauf kontrollierbar geändert werden kann. Die Modulation soll bevorzugt eine zeitliche Änderung der Intensität als messbare Größe hervorrufen. Das bedeutet z. B., dass die Intensität im zeitlichen Verlauf zwischen der innerhalb des Messzeitraums gemessenen schwächsten Intensität und der innerhalb desselben Zeitraums gemessenen stärksten Intensität ein Unterschied besteht, der größer ist als die Sensibilität eines für das Strahlungsspektrum und die Anwendung typischerweise verwendeten Geräts zur Messung oder Bestimmung der Intensität. Bevorzugt ist der Unterschied deutlich größer als ein Faktor 2, mehr bevorzugt 4, 6 oder 8 zwischen der stärksten und der schwächsten einstellbaren Intensität. Besonders bevorzugt erfolgt die Modulation der Intensität des modulierten Strahles für eine oder mehrere vorbestimmte Resonanzwellenlängen.

Vorzugsweise kann eine direkte Modulation durch Variation der Stromzufuhr vorgenommen werden. Bei einem thermischen Emitter ist eine solche Modulation aufgrund thermischer Zeitkonstanten meistens auf einen bestimmten Bereich eines Modulationsspektrums limitiert, z. B. im Bereich einer Größenordnung von bis zu 100 Hz. Bei z. B. einem Laser oder einer LED sind bevorzugt deutlich höhere Modulationsraten, z. B. im kHz-Bereich und darüber hinaus, möglich.

Eine Modulation des Emitters kann vorzugsweise ebenso durch eine externe Modulation erfolgen, z. B. durch die Verwendung eines sich drehend Chopperrads und/oder eines elektrooptischen Modulators.

Das zu analysierende Gas befindet sich bevorzugt in einem mit Gas befüllbaren Analysevolumen. In einer bevorzugten Ausführungsform ist dieses ein nach außen zumindest bereichsweise abgeschlossenes oder abschließbares Volumen (bzw. Kammer), in der sich das Gas befindet bzw. eingeleitet werden kann, z. B. durch eine verschließbare Öffnung in Form eines Verschlusses und/oder Ventils und/oder durch eine Zuleitung. Es kann sich aber auch um ein komplett abgeschlossenes oder abschließbares Volumen bzw. Kammer handeln, welches zumindest eine, vorzugsweise zwei verschließbare Öffnung zur Einleitung und/oder Ausleitung des zu analysierenden Gases aufweist. So kann das zu analysierende Gas sehr gut lokalisiert werden, insbesondere in einem Strahlbereich des Emitters, beispielsweise einer Infrarotstrahlung.

Das Analysevolumen kann vorzugsweise ebenso zumindest teilweise geöffnet sein. Dadurch kann insbesondere eine das Spektroskop umgebende Gasatmosphäre, gegenüber dem das Analysevolumen zumindest teilweise geöffnet ist, vermessen und auf ihre Zusammensetzung überprüft werden. Dies ist insbesondere interessant für Anwendungen im Bereich der Schadstoffmessung, aber auch z. B. für militärische Anwendungen oder zur Terrorabwehr, z. B. durch einen Giftgasangriff.

Vorteilhaft ist in diesem Fall, dass das Analysevolumen wohl definiert ist, so dass Emitter, das Analysevolumen und das MEMS-Mikrofon derart angeordnet vorliegen, dass die von dem Emitter modulierbar emittierbare Strahlung Gas im Analysevolumen zur Ausbildung von Schalldruckwellen anregen kann, welche mit Hilfe des MEMS-Mikrofons messbar sind.

Das Analysevolumen liegt bevorzugt im Strahlengang des Emitters vor. Das bedeutet bevorzugt, dass die Intensität des Strahls im Wesentlichen oder zumindest teilweise auf die dem Emitter zugewandte Seite des Analysevolumens trifft. Teilweise bedeutet bevorzugt zu mindestens 40 %, bevorzugt mindestens 50%, 60%, 70%, 80% oder mehr.

Ein Analysevolumen kann durch eine Kammer gebildet werden. Es kann aber auch bevorzugt sein, dass das Analysevolumen eine Probekammer und eine Referenzkammer umfassen, welche durch einen Verbindungskanal verbunden bzw. verbindbar sind.

Im Falle einer Ausführungsform eines Analysevolumens, welche eine Probekammer und eine Referenzkammer aufweist, kann es bevorzugt sein, in jeder Kammer einen MEMS-Mikrofon zu positionieren, um in jeder Kammer separat zu messen und somit Störquellen, z. B. externe Schalldruckwellen, welche nicht von der in der Probekammer absorbierten Strahlung herrühren, vorzugsweise nach der Messung herausrechnen zu können.

Ebenso kann es bevorzugt sein, dass der Emitter die Probekammer und nicht die Referenzkammer bestrahlt und wobei zwischen der Probekammer und Referenzkammer ein Verbindungskanal vorliegt, in welchem das MEMS-Mikrofon als Schalldetektor befindet. In dem Probenvolumen und Referenzvolumen kann sich das gleiche Gas befinden. Es kann ebenso bevorzugt sein, dass im Probevolumen und im Referenzvolumen unterschiedliches Gas umfasst ist, wobei im Referenzvolumen ein Gas mit bekannten Eigenschaften vorliegt und im Probenvolumen ein zu analysierendes Gas vorliegt. Diese Ausführungsform zeichnet sich durch eine besonders präzise photoakustische Spektroskopie aus, da beispielsweise Schall von unerwünschten Schallquellen bei der Messung und/oder der Auswertung der Messung herausgerechnet bzw. nicht mitgemessen wird. Vorzugsweise können Probenvolumen und ein Referenzvolumen im Wesentlichen gleiche Abmessungen aufweisen, um eine genaue differentielle Messmethode zu realisieren.

Das erfindungsgemäße MEMS-Mikrofon soll im Folgenden anhand von Beispielen näher erläutert werden, ohne auf diese Beispiele beschränkt zu sein.

### FIGUREN

### Kurzbeschreibung der Figuren

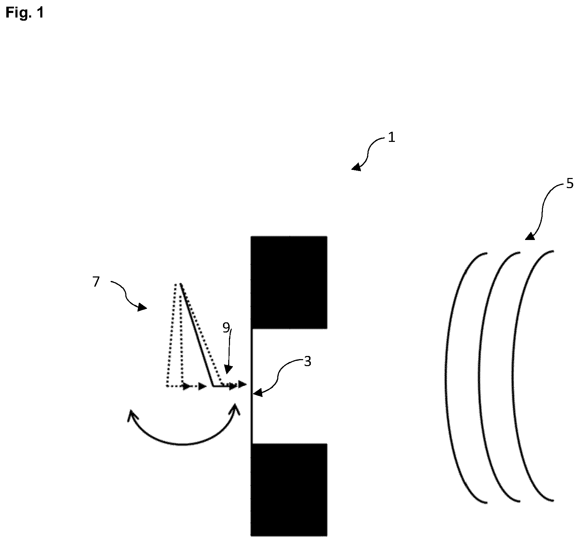

- **Fig. 1**: Schematische Darstellung eines bevorzugten MEMS-Mikrofons

### Detaillierte Beschreibung der Figuren

**Fig. 1** zeigt eine schematische Darstellung eines bevorzugten MEMS-Mikrofons 1. Wie in den obigen Ausführungen dargelegt, eignet sich das MEMS-Mikrofon 1 besonders gut, um mit hoher Auflösung niedrige Schalldruckpegel zu messen.

Das MEMS-Mikrofon **1** umfasst eine schwingfähige Mikrofonmembran **3.** Tritt ein Schallereignis auf, so breiten sich Schallwellen **5** ausgehend von einer Schallquelle in Richtung des MEMS-Mikrofons **1** durch eine Schalleintrittsöffnung aus und treffen auf Mikrofonmembran **3,** die daraufhin zu Schwingungen angeregt wird. Des Weiteren weist das MEMS-Mikrofon **1** einen Cantilever **7** umfassend eine Messspitze **9** auf. Weitere Komponenten wie eine elektronische Schaltung und ein Aktuator sind in **Fig. 1** nicht dargestellt.

Die elektronische Schaltung ist dazu eingerichtet, dass der Cantilever **7** umfassend der Messspitze **9** aktiv zu Schwingungen angeregt wird, wobei die Übertragung zur Durchführung Schwingung durch den Aktuator erfolgen kann. Die Schwingung des Cantilevers **7** und damit der Messspitze **9** soll durch die gestrichelte Linie und den gebogenen Pfeil unterhalb der Messspitze **9** verdeutlicht werden. Die Messspitze **9** und die Mikrofonmembran **3** umfassen elektrisch leitfähiges Material. Die Messspitze **9** wird so nah kontaktlos schwingend an die Mikrofonmembran **3** geführt, dass basierend auf dem quantenmechanischen Tunneleffekt ein Tunnelstrom (nicht abgebildet) fließt. Der Tunnelstrom reflektiert als periodisches Signal die Schwingung der Messspitze **9,** da sich der Abstand zwischen der Messspitze **9** und der Mikrofonmembran periodisch ändert. Der messbare Tunnelstrom erlaubt eine Detektion des Schwingungsverhaltens der Mikrofonmembran **3,** der von den Schallwellen **5,** insbesondere von Größen wie z. B. den Schalldruckpegel und/oder der Frequenz, abhängt.

Vorteilhaft können mithilfe des MEMS-Mikrofons **1** niedrige Schalldruckpegel bei gleichzeitig hohem Signal-Rausch-Verhältnis gemessen werden, da der Tunnelstrom durch die exponentielle Abhängigkeit vom Abstand geringste Auslenkungen der Mikrofonmembran **3** besonders präzise messen kann.

Das MEMS-Mikrofon **1** ist auch dahingehend vorteilhaft, dass besonders zuverlässig ein Kontakt zwischen der Messspitze **9** und der Mikrofonmembran **3** vermieden wird. Weiterhin treten vorteilhaft keine Strömungsverluste des Schalls auf, sodass ein besonders genaues Schallbild erzeugt werden kann. Somit kann das MEMS-Mikrofon **1** mit hoher Präzession und Zuverlässigkeit Schalldruckpegel messen und bereits geringste Abweichungen genau feststellen.

Der Cantilever **7** und damit auch die Messspitze **9** führen Schwingungen aus, die deutlich schneller sind als erwartbare Schwingungen der schwingfähigen Mikrofonmembran **3,** sodass vorteilhafterweise auch die Schwingung des Cantilevers **7** und/oder der Messspitze **9** unabhängig von der Schwingung der Mikrofonmembran **3** ist. Daher kann die Mikrofonmembran **3** in einem weiten Frequenzbereich schwingen bei gleichzeitig zuverlässiger und besonders sensitiver Detektionsmöglichkeit von Schallwellen durch den Tunnelstrom.

Das MEMS-Mikrofon **1** kann verschiedene Betriebsmodi aufweisen.

So kann die elektronische Schaltung dazu eingerichtet sein, dass eine Amplitude und eine Mittelposition einer Schwingung der Messpitze **9** und/oder des Cantilevers **7** konstant gehalten wird. Dabei wird eine Änderung der Amplitude des Tunnelstroms gemessen, die Aufschluss über das Schwingungsverhalten der Mikrofonmembran **3** und mit über Schallparameter wie den Schalldruckpegel auftreffender Schallwellen **5** gibt.

Weiterhin kann die elektronische Schaltung derart konfiguriert sein, dass eine Amplitude des Tunnelstroms zwischen der Mikrofonmembran **3** und der Messspitze **9** konstant gehalten wird. Dies wird dadurch erzielt, indem eine Schwingung des Cantilevers **7** und damit der Messspitze **9** derart reguliert wird, dass ein Abstand zwischen der Mikrofonmembran **3** und einer Mittelposition der Messspitze **9** konstant gehalten wird. Dies erfolgt insbesondere durch einen geschlossenen Regelkreis, der beispielsweise durch die elektronische Schaltung gegeben sein kann. In diesem Fall erlaubt die notwendige Abstandsanpassung zwischen der Mikrofonmembran **3** und einer Mittelposition der Messspitze **9** unmittelbar Rückschlüsse auf das Schwingungsverhalten der Membran und mithin die auftreffenden Schallwellen **5.**

### BEZUGSZEICHENLISTE

- 1: MEMS-Mikrofon
- 3: Schwingfähige Mikrofonmembran
- 5: Schallwellen
- 7: Cantilever
- 9: Messspitze

### LITERATURVERZEICHNIS

Sievilä, Päivi, et al. "Sensitivity-improved silicon cantilever microphone for acousto-optical detection." Sensors and Actuators A: Physical 190 (2013): 90-95.

## Patentansprüche

1. MEMS-Mikrofon (1) zur Detektion akustischer Signale umfassend eine Schalleintrittsöffnung, eine schwingfähige Mikrofonmembran (3) und eine elektronische Schaltung, wobei durch die Schalleintrittsöffnung eintretende Schallwellen (5) die schwingfähige Mikrofonmembran (3) zu Schwingungen anregen,
**dadurch gekennzeichnet, dass**
das MEMS-Mikrofon (1) einen Cantilever (7) umfassend eine Messspitze (9) und einen Aktuator aufweist, wobei die elektronische Schaltung für eine Messung eines Tunnelstroms zwischen der Mikrofonmembran (3) und der Messspitze (9) sowie für eine aktive Anregung des Cantilevers (7) zu Schwingungen eingerichtet ist, wobei zur Detektion akustischer Signale die Messspitze (9) kontaktlos schwingend an die Mikrofonmembran (3) geführt wird, während der messbare Tunnelstrom eine Detektion des von den Schallwellen (5) abhängigen Schwingungsverhaltens der Mikrofonmembran (3) erlaubt, wobei der Cantilever (7) durch die aktive Anregung eine periodische Schwingung ausführt, bei der sich ein Abstand zwischen der Messspitze (9) und der Mikrofonmembran (3) mit der Periodizität der aktiven Anregung ändert.

2. MEMS-Mikrofon (1) nach dem vorherigen Anspruch
**dadurch gekennzeichnet, dass**
der Cantilever (7) durch die aktive Anregung periodische Schwingungen unabhängig von dem Schwingungsverhalten der Mikrofonmembran ausführt, vorzugsweise mit einer Frequenz von mehr als 20 kHz, bevorzugt mehr als 50 kHz, besonders bevorzugt mehr als 100 kHz.

3. MEMS-Mikrofon (1) nach einem oder mehreren der vorherigen Ansprüche
**dadurch gekennzeichnet, dass**
die elektronische Schaltung dazu eingerichtet ist, dass eine Amplitude und eine Mittelposition einer Schwingung der Messpitze (9) und/oder des Cantilevers (7) konstant gehalten wird, wobei eine Änderung einer Amplitude des Tunnelstroms zwischen der Mikrofonmembran (3) und der Messspitze (9) gemessen wird, wobei die Amplitude des Tunnelstroms von dem Schwingungsverhaltens der Mikrofonmembran (3) abhängt.

4. MEMS-Mikrofon (1) nach einem oder mehreren der vorherigen Ansprüche
**dadurch gekennzeichnet, dass**
die elektronische Schaltung dazu eingerichtet ist, dass eine Amplitude des Tunnelstroms zwischen der Mikrofonmembran (3) und der Messspitze (9) konstant gehalten wird, wobei eine Schwingung des Cantilevers (7) und/oder der Messspitze (9) reguliert wird, um einen Abstand zwischen der Mikrofonmembran (3) und einer Mittelposition der Messspitze (9) konstant zu halten.

5. MEMS-Mikrofon (1) nach einem oder mehreren der vorherigen Ansprüche
**dadurch gekennzeichnet, dass**
die elektronische Schaltung dazu eingerichtet ist, eine Vorspannung an der Mikrofonmembran (3) anzulegen, sodass eine Nullpunktslage und/oder Schwingfähigkeit der Mikrofonmembran (3) reguliert werden kann.

6. MEMS-Mikrofon (1) nach einem oder mehreren der vorherigen Ansprüche
**dadurch gekennzeichnet, dass**
das MEMS-Mikrofon (1) eine Sensitivität aufweist, welche es erlaubt, Schalldruckwellen (5) mit einem Schalldruckpegel von weniger als 20 dB, besonders bevorzugt weniger als 10 dB, zu messen.

7. MEMS-Mikrofon (1) nach einem oder mehreren der vorherigen Ansprüche
**dadurch gekennzeichnet, dass**
die elektronische Schaltung dazu eingerichtet ist, dass der Aktuator die Schwingung des Cantilevers (7) derart reguliert, dass zwischen maximalen Auslenkungen der Messspitze (9) und der schwingfähigen Mikrofonmembran (3) ein Abstand zwischen 0,1 nm und 100 nm vorliegt.

8. MEMS-Mikrofon (1) nach einem oder mehreren der vorherigen Ansprüche
**dadurch gekennzeichnet, dass**
der Aktuator den Cantilever (3) umfassend der Messspitze (9) zu Schwingungen anregt, wobei bevorzugt der Aktuator ausgewählt ist aus einer Gruppe umfassend ein piezoelektrischer Aktuator, ein elektrostatischer Aktuator, ein elektromagnetischer Aktuator und/oder ein thermischer Aktuator.

9. MEMS-Mikrofon (1) nach einem oder mehreren der vorherigen Ansprüche
**dadurch gekennzeichnet, dass**
die schwingfähige Mikrofonmembran (3) ein elektrisch leitfähiges Material umfasst, wobei bevorzugt das elektrische leitfähige Material ausgewählt ist aus einer Gruppe umfassend Monosilizium, Polysilizium, Molybdän, Tantal, Aluminium, Graphit, Wolfram, Titan, Platin, Gold, Palladium, Eisen, Kupfer, Silber, Messing, Chrom, deren Verbindungen und/oder Legierungen, wobei optional die schwingfähige Mikrofonmembran (3) ein zusätzliches nicht elektrisch leifähiges Material umfasst, welches bevorzugt ausgewählt ist aus einer Gruppe umfassend Siliziumnitrid und/oder Siliziumdioxid.

10. MEMS-Mikrofon (1) nach einem oder mehreren der vorherigen Ansprüche
**dadurch gekennzeichnet, dass**
dass der Cantilever (7) und/oder die Messspitze (9) ein Material umfasst ausgewählt aus einer Gruppe umfassend Silizium, Iridium, Wolfram, Platin, Palladium und/oder Gold.

11. MEMS-Mikrofon (1) nach einem oder mehreren der vorherigen Ansprüche
**dadurch gekennzeichnet, dass**
die Messspitze (9) einen Radius von bis zu 15 nm, bevorzugt bis zu 10 nm, besonders bevorzugt bis zu 5 nm aufweist.

12. MEMS-Mikrofon (1) nach einem oder mehreren der vorherigen Ansprüche
**dadurch gekennzeichnet, dass**
der Cantilever (7) eine Länge von bis zu 1000 µm Länge, eine Breite von bis zu 100 µm Breite und eine Dicke von bis zu 10 µm aufweist.

13. Verfahren zur Detektion akustischer Signale umfassend ein MEMS-Mikrofon (1) umfassend eine Schalleintrittsöffnung, eine schwingfähige Mikrofonmembran (3) und eine elektronische Schaltung, wobei durch die Schalleintrittsöffnung eintretende Schallwellen (5) die schwingfähige Mikrofonmembran (3) zu Schwingungen anregen,
**dadurch gekennzeichnet, dass**
das MEMS-Mikrofon (1) einen Cantilever (7) umfassend eine Messspitze (9) und einen Aktuator aufweist, wobei der Cantilever (7) und/oder die Messspitze (9) durch den Aktuator aktiv zu Schwingungen angeregt wird und kontaktlos schwingend an die Mikrofonmembran geführt wird, sodass ein Tunnelstrom zwischen der Messspitze (9) und der Mikrofonmembran (3) gemessen wird und der Tunnelstrom eine Detektion des von den Schallwellen (5) abhängigen Schwingungsverhaltens der Mikrofonmembran (3) erlaubt, wobei sich ein Abstand zwischen der Messspitze (9) und der Mikrofonmembran (3) mit der Periodizität der aktiven Anregung ändert.

14. Verwendung des MEMS-Mikrofons (1) nach einem oder mehreren der Ansprüche 1 - 12 für die photoakustische Spektroskopie und/oder Infrarotspektroskopie.

15. Photoakustischer Gassensor umfassend
- einen modulierbaren Emitter,
- ein mit Gas befüllbares Analysevolumen und
- ein MEMS-Mikrofon (1) gemäß einem der vorherigen Ansprüche 1-12,
wobei der modulierbare Emitter und das MEMS-Mikrofon derart angeordnet sind, dass der Emitter mittels modulierbar emittierbarer Strahlung Gas in dem Analysevolumen zur Ausbildung von Schalldruckwellen anregen kann, welche mit Hilfe des MEMS-Sensors detektierbar sind.

## Claims

1. MEMS microphone (1) for detecting acoustic signals, comprising a sound inlet opening , a vibratable microphone membrane (3) and an electronic circuit, wherein sound waves (5) entering through the sound inlet opening induce the vibratable microphone membrane (3) into vibrations,
**characterized in that**
the MEMS microphone (1) exhibits a cantilever (7) comprising a measuring tip (9) and an actuator, the electronic circuit being configured for measuring a tunnel current between the microphone membrane (3) and the measuring tip (9) and for an active induction of the cantilever (7) into vibrations, wherein, for the detection of acoustic signals, the measuring tip (9) is guided to the microphone membrane (3) in a contactless vibrating manner, while the measurable tunnel current permits detection of the vibration behavior of the microphone membrane (3) which is dependent on the sound waves (5), wherein the cantilever (7) performs a periodic vibration due to the active induction in which a distance between the microphone membrane (3) and the measuring tip (9) changes with the periodicity of the active induction.

2. MEMS microphone (1) according to the previous claim
**characterized in that**
the cantilever (7) performs vibrations independently of the vibration behavior of the microphone membrane (3) due to the active induction, preferably with a frequency of more than 20 kHz, preferably more than 50 kHz, particularly preferably more than 100 kHz.

3. MEMS microphone (1) according to one or more of the preceding claims
**characterized in that**
the electronic circuit is arranged to keep an amplitude and a center position of a vibration of the measuring tip (9) and/or the cantilever (7) constant, wherein a change in an amplitude of the tunnel current between the microphone membrane (3) and the measuring tip (9) is measured, wherein the amplitude of the tunnel current depends on the vibration behavior of the microphone membrane (3).

4. MEMS microphone (1) according to one or more of the preceding claims
**characterized in that**
the electronic circuit is arranged to keep an amplitude of the tunnel current between the microphone membrane (3) and the measuring tip (9) constant, wherein a vibration of the cantilever (7) and/or the measuring tip (9) is regulated to keep a distance between the microphone membrane (3) and a center position of the measuring tip (9) constant.

5. MEMS microphone (1) according to one or more of the preceding claims
**characterized in that**
the electronic circuit is configured to apply a bias voltage to the microphone membrane (3) such that a zero point position and/or vibration capability of the microphone membrane (3) can be regulated.

6. MEMS microphone (1) according to one or more of the preceding claims
**characterized in that**
the MEMS microphone (1) exhibits a sensitivity which allows sound pressure waves (5) with a sound pressure level of less than 20 dB, particularly preferably less than 10 dB, to be measured.

7. MEMS microphone (1) according to one or more of the preceding claims
**characterized in that**
the electronic circuit is configured such that the actuator regulates the vibration of the cantilever (7) in such a way that there is a distance of between 0.1 nm and 100 nm between maximum deflections of the measuring tip (9) and the vibratable microphone membrane (3).

8. MEMS microphone (1) according to one or more of the preceding claims
**characterized in that**
the actuator induces the cantilever (3) comprising the measuring tip (9) into vibrations, wherein preferably the actuator is selected from a group comprising a piezoelectric actuator, an electrostatic actuator, an electromagnetic actuator and/or a thermal actuator.

9. MEMS microphone (1) according to one or more of the preceding claims
**characterized in that**
the vibratable microphone membrane (3) comprises an electrically conductive material, wherein preferably the electrically conductive material is selected from a group comprising monosilicon, polysilicon, molybdenum, tantalum, aluminum, graphite, tungsten, titanium, platinum, gold, palladium, iron, copper, silver, brass, chromium, their compounds and/or alloys, wherein optionally the vibratable microphone membrane (3) comprises an additional non-electrically conductive material, which is preferably selected from a group comprising silicon nitride and/or silicon dioxide.

10. MEMS microphone (1) according to one or more of the preceding claims
**characterized in that**
**in that** the cantilever (7) and/or the measuring tip (9) comprises a material selected from a group comprising silicon, iridium, tungsten, platinum, palladium and/or gold.

11. MEMS microphone (1) according to one or more of the preceding claims
**characterized in that**
the measuring tip (9) exhibits a radius of up to 15 nm, preferably up to 10 nm, particularly preferably up to 5 nm.

12. MEMS microphone (1) according to one or more of the preceding claims
**characterized in that**
the cantilever (7) exhibits a length of up to 1000 µm, a width of up to 100 µm and a thickness of up to 10 µm.

13. Method for detecting acoustic signals comprising a MEMS microphone (1) comprising a sound inlet opening, a vibratable microphone membrane (3) and an electronic circuit, wherein sound waves (5) entering through the sound inlet opening induce the vibratable microphone membrane (3) into vibrations,
**characterized in that**
the MEMS microphone (1) exhibits a cantilever (7) comprising a measuring tip (9) and an actuator, the cantilever (7) and/or the measuring tip (9) being actively induced into vibrations by the actuator and being guided to the microphone membrane in a contactless vibrating manner, such that a tunnel current between the measuring tip (9) and the microphone membrane (3) is measured and the tunnel current permits detection of the vibration behavior of the microphone membrane (3) dependent on the sound waves (5), wherein a distance between the microphone membrane (3) and the measuring tip (9) changes with the periodicity of the active induction.

14. Use of the MEMS microphone (1) according to one or more of claims 1 - 12 for photoacoustic spectroscopy and/or infrared spectroscopy.

15. Photoacoustic gas sensor comprising
- a modulable emitter,
- an analysis volume that can be filled with gas and
- a MEMS microphone (1) according to any of the previous claims 1-12,
wherein the modulable emitter and the MEMS microphone are arranged in such a way that the emitter can excite gas in the analysis volume by means of modulably emittable radiation to form sound pressure waves, which can be detected with the aid of the MEMS sensor.

## Revendications

1. Microphone MEMS (1) pour la détection de signaux acoustiques, comprenant une ouverture d'entrée acoustique, une membrane de microphone (3) apte à vibrer et un circuit électronique, dans lequel des ondes sonores (5) entrant par l'ouverture d'entrée acoustique excitent la membrane de microphone (3) en vibrations,
**caractérisé en ce que**
**caractérisé en ce que** le microphone MEMS (1) présente un cantilever (7) comprenant une pointe de mesure (9) et un actionneur, dans lequel le circuit électronique est configuré pour la mesure d'un courant tunnel entre la membrane de microphone (3) et la pointe de mesure (9), ainsi que pour une excitation active du cantilever (7) en oscillations, dans lequel, pour la détection de signaux acoustiques, la pointe de mesure (9) est amenée à osciller sans contact vis-à-vis de la membrane de microphone (3), tandis que le courant tunnel mesurable permet une détection du comportement vibratoire de la membrane de microphone (3) dépendant des ondes sonores (5), dans lequel le cantilever (7), par l'excitation active, effectue une oscillation périodique, au cours de laquelle une distance entre la pointe de mesure (9) et la membrane de microphone (3) varie avec la périodicité de l'excitation active.

2. Microphone MEMS (1) selon la revendication précédente
**caractérisé en ce que**
le cantilever (7), par l'excitation active, effectue des oscillations périodiques indépendamment du comportement vibratoire de la membrane de microphone, de préférence avec une fréquence supérieure à 20 kHz, de préférence supérieure à 50 kHz, de manière particulièrement préférée supérieure à 100 kHz.

3. Microphone MEMS (1) selon l'une ou plusieurs des revendications précédentes
**caractérisé en ce que**
le circuit électronique est configuré de sorte qu'une amplitude et une position moyenne d'une oscillation de la pointe de mesure (9) et/ou du cantilever (7) sont maintenues constantes, dans lequel une modification d'une amplitude du courant tunnel entre la membrane de microphone (3) et la pointe de mesure (9) est mesurée, dans lequel l'amplitude du courant tunnel dépend du comportement vibratoire de la membrane de microphone (3).

4. Microphone MEMS (1) selon l'une ou plusieurs des revendications précédentes
**caractérisé en ce que**
le circuit électronique est configuré de sorte qu'une amplitude du courant tunnel entre la membrane de microphone (3) et la pointe de mesure (9) est maintenue constante, dans lequel une oscillation du cantilever (7) et/ou de la pointe de mesure (9) est régulée afin de maintenir constante une distance entre la membrane de microphone (3) et une position moyenne de la pointe de mesure (9).

5. Microphone MEMS (1) selon l'une ou plusieurs des revendications précédentes
**caractérisé en ce que**
le circuit électronique est configuré pour appliquer une précharge à la membrane de microphone (3), de sorte qu'une position zéro et/ou la capacité de vibration de la membrane de microphone (3) puisse être régulée.

6. Microphone MEMS (1) selon l'une ou plusieurs des revendications précédentes
**caractérisé en ce que**
le microphone MEMS (1) présente une sensibilité qui permet de mesurer des ondes de pression acoustique (5) avec un niveau de pression sonore inférieur à 20 dB, de manière particulièrement préférée inférieur à 10 dB.

7. Microphone MEMS (1) selon l'une ou plusieurs des revendications précédentes
**caractérisé en ce que**
le circuit électronique est configuré de sorte que l'actionneur régule l'oscillation du cantilever (7) de manière à ce qu'un écart compris entre 0,1 nm et 100 nm soit présent entre les excursions maximales de la pointe de mesure (9) et de la membrane de microphone (3) apte à vibrer.

8. Microphone MEMS (1) selon l'une ou plusieurs des revendications précédentes
**caractérisé en ce que**
l'actionneur excite le cantilever (3) comprenant la pointe de mesure (9) en oscillations, dans lequel l'actionneur est de préférence choisi dans un groupe comprenant un actionneur piézoélectrique, un actionneur électrostatique, un actionneur électromagnétique et/ou un actionneur thermique.

9. Microphone MEMS (1) selon l'une ou plusieurs des revendications précédentes
**caractérisé en ce que**
la membrane de microphone (3) apte à vibrer comprend un matériau électriquement conducteur, dans lequel le matériau électriquement conducteur est de préférence choisi dans un groupe comprenant le silicium mono, le silicium poly, le molybdène, le tantale, l'aluminium, le graphite, le tungstène, le titane, le platine, l'or, le palladium, le fer, le cuivre, l'argent, le laiton, le chrome, leurs composés et/ou alliages, dans lequel la membrane de microphone (3) apte à vibrer comprend éventuellement un matériau supplémentaire non électriquement conducteur, lequel est de préférence choisi dans un groupe comprenant le nitrure de silicium et/ou le dioxyde de silicium.

10. Microphone MEMS (1) selon l'une ou plusieurs des revendications précédentes
**caractérisé en ce que**
le cantilever (7) et/ou la pointe de mesure (9) comprend un matériau choisi dans un groupe comprenant le silicium, l'iridium, le tungstène, le platine, le palladium et/ou l'or.

11. Microphone MEMS (1) selon l'une ou plusieurs des revendications précédentes
**caractérisé en ce que**
la pointe de mesure (9) présente un rayon allant jusqu'à 15 nm, de préférence jusqu'à 10 nm, de manière particulièrement préférée jusqu'à 5 nm.

12. Microphone MEMS (1) selon l'une ou plusieurs des revendications précédentes
**caractérisé en ce que**
le cantilever (7) présente une longueur allant jusqu'à 1000 µm, une largeur allant jusqu'à 100 µm et une épaisseur allant jusqu'à 10 µm.

13. Procédé pour la détection de signaux acoustiques, comprenant un microphone MEMS (1) comprenant une ouverture d'entrée acoustique, une membrane de microphone (3) apte à vibrer et un circuit électronique, dans lequel des ondes sonores (5) entrant par l'ouverture d'entrée acoustique excitent la membrane de microphone (3) en vibrations,
**caractérisé en ce que**
le microphone MEMS (1) comprend un cantilever (7) comprenant une pointe de mesure (9) et un actionneur, dans lequel le cantilever (7) et/ou la pointe de mesure (9) est activement excité en oscillations par l'actionneur et amené à osciller sans contact vis-à-vis de la membrane de microphone, de sorte qu'un courant tunnel entre la pointe de mesure (9) et la membrane de microphone (3) soit mesuré, et que le courant tunnel permette une détection du comportement vibratoire de la membrane de microphone (3) dépendant des ondes sonores (5), dans lequel une distance entre la pointe de mesure (9) et la membrane de microphone (3) varie avec la périodicité de l'excitation active.

14. Utilisation du microphone MEMS (1) selon une ou plusieurs des revendications 1 à 12 pour la spectroscopie photoacoustique et/ou la spectroscopie infrarouge.

15. Capteur de gaz photoacoustique comprenant
- un émetteur modulable,
- un volume d'analyse qui peut être rempli de gaz et
- un microphone MEMS (1) selon l'une quelconque des revendications précédentes 1 à 12,
dans lequel l'émetteur modulable et le microphone MEMS sont disposés de sorte que l'émetteur puisse, au moyen d'un rayonnement modulable émis, exciter le gaz dans le volume d'analyse pour former des ondes de pression acoustique, lesquelles peuvent être détectées à l'aide du capteur MEMS.
